# EUROPEAN PATENT APPLICATION

(11) **EP 4 255 040 A1**
(43) Date of publication of application: **04.10.2023**
(21) Application number: 22738954.1
(22) Date of filing: 10.01.2022
(51) Int. Cl.: H04W 52/02

(54) **POWER SAVING PROCESSING METHOD, APPARATUS AND DEVICE**

(30) Priority: 15.01.2021 CN 202110057830
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); ZENG, Yu, Dongguan, Guangdong 523863 (CN)
(74) Representative: Murgitroyd & Company
(86) International application number: PCT/CN2022/070977
(87) International publication number: WO 2022/152073

(57) **Abstract**

This application discloses a power saving processing method and apparatus and a device, and relates to the technical field of communications. The method includes: sending power saving information, the power saving information being used for indicating that first target user equipment is active, wakes up, is non-active or is dormant; where the power saving information includes at least one of the following: occupancy information; or a power saving indication command.

## Description

### CROSS-REFERENCE TO RELATED APPLICATION

This application claims the priority of Chinese Patent Application No. 202110057830.8 filed in China on January 15, 2021, the entire content of which is incorporated herein by reference.

### TECHNICAL FIELD

This application belongs to the technical field of communications, and particularly relates to a power saving processing method and apparatus and a device.

### BACKGROUND

At present, some low-capacity user equipment, such as a mobile phone and a household device, may need to perform direct or indirect communication between equipment through a side link (Side Link, SL). A battery capacity of these equipment is low and cannot be used for a long time, moreover, a data volume of some services between equipment may be low, and a periodicity is long.

However, in existing SL transmission, the equipment has to remain in an active state on duration (on duration) for receiving and/or sending. However, on duration, some equipment may have no packet needing transmission or cannot receive scheduling signaling, and in this case, unnecessary power consumption may be caused if the user equipment is forced to wake up on duration.

### SUMMARY

Objectives of embodiments of this application are to provide a power saving processing method and apparatus and a device, which can solve the problem of unnecessary power consumption of user equipment for SL transmission.

To solve the foregoing technical problem, this application is implemented as follows.

In a first aspect, an embodiment of this application provides a power saving processing method, executed by first user equipment and including:
sending power saving information, the power saving information being used for indicating that the first target user equipment is active, wakes up, is non-active or is dormant; where, and
the power saving information including at least one of the following:
   occupancy information; or
   a power saving indication command.

In a second aspect, an embodiment of this application provides a power saving processing method, executed by second user equipment and including:
receiving power saving information, the power saving information being used for indicating that first target user equipment is active, wakes up, is non-active or is dormant, and
the power saving information including at least one of the following:
   occupancy information; or
   a power saving indication command.

In a third aspect, an embodiment of this application provides a power saving processing apparatus, including:
a sending module, configured to send power saving information, the power saving information being used for indicating that first target user equipment is active, wakes up, is non-active or is dormant, and
the power saving information including at least one of the following:
   occupancy information; or
   a power saving indication command.

In a fourth aspect, an embodiment of this application provides a power saving processing apparatus, including:
a receiving module, configured to receive power saving information, the power saving information being used for indicating that first target user equipment is active, wakes up, is non-active or is dormant, and
the power saving information including at least one of the following:
   occupancy information; or
   a power saving indication command.

In a fifth aspect, an embodiment of this application further provides an electronic device, including a processor, a memory, and a program or an instruction stored in the memory and executable on the processor, and the program or the instruction, when executed by the processor, implementing steps of the method described in the first aspect or steps of the method described in the second aspect.

In a sixth aspect, an embodiment of this application further provides a readable storage medium, storing a program or an instruction, and the program or the instruction, when executed by a processor, implementing steps of the method described in the first aspect, or steps of the method described in the second aspect.

In a seventh aspect, an embodiment of this application provides a chip, including a processor and a communication interface, the communication interface being coupled to the processor, and the processor being configured to run a program or an instruction to implement the method described in the first aspect or the method described in the second aspect.

In an eighth aspect, an embodiment of this application provides a program product, stored in a non-volatile storage medium, and the program product being executed by at least one processor to implement steps of the method described in the first aspect or steps of the method described in the second aspect.

Accordingly, in the embodiments of this application, by sending the power saving information which indicates that the first target user equipment is active, wakes up, is non-active or is dormant, user equipment receiving the power saving information can be informed that the first target user equipment is active, wakes up, is non-active or is dormant currently, so that adjustment of corresponding transmission may be further performed subsequently, and unnecessary power consumption is avoided.

### BRIEF DESCRIPTION OF THE DRAWINGS

FIG. 1 is a block diagram of a wireless communication system.
FIG. 2 is a first schematic flowchart of a power saving processing method of an embodiment of this application.
FIG. 3 is a schematic diagram of a first scenario in an embodiment of this application.
FIG. 4 is a first schematic diagram of power saving information indicating at least a part of a target resource in an embodiment of this application.
FIG. 5 is a second schematic diagram of power saving information indicating at least a part of a target resource in an embodiment of this application.
FIG. 6 is a third schematic diagram of power saving information indicating at least a part of a target resource in an embodiment of this application.
FIG. 7 is a fourth schematic diagram of power saving information indicating at least a part of a target resource in an embodiment of this application.
FIG, 8 is a fifth schematic diagram of power saving information indicating at least a part of a target resource in an embodiment of this application.
FIG. 9 is a sixth schematic diagram of power saving information indicating at least a part of a target resource in an embodiment of this application.
FIG. 10 is a seventh schematic diagram of power saving information indicating at least a part of a target resource in an embodiment of this application.
FIG. 11 is a second schematic flowchart of a power saving processing method of an embodiment of this application.
FIG. 12 is a structural diagram of an apparatus corresponding to FIG. 2.
FIG. 13 is a structural diagram of an apparatus corresponding to FIG. 11.
FIG. 14 is a structural diagram of a communication device of an embodiment of this application.
FIG. 15 is a structural diagram of user equipment of an embodiment of this application.

### DETAILED DESCRIPTION

The technical solutions in embodiments of this application are clearly and completely described below with reference to accompanying drawings in the embodiments of this application. Apparently, the described embodiments are some rather than all of the embodiments of this application. All other embodiments obtained by a person of ordinary skill in the art based on the embodiments of this application, without making creative efforts, shall fall within the protection scope of this application.

In the specification and claims of this application, and terms such as "first" and "second" are used to distinguish similar objects, but are not used to describe a specific sequence or precedence order. It is to be understood that such used data are interchangeable where appropriate so that the embodiments of this application can be implemented in an order other than those illustrated or described here. In addition, "and/or" in the specification and the claims represents at least one of the connected objects. A character "j" generally indicates an "and/or" relationship between associated objects before and after the character in addition to its use in "and/or". "()" may further represent an optional feature in addition to explanation, and transmission is construed as receiving or sending. Besides, a ratio of A to B in this application may be A÷B, or may also be B÷A. If it claims protection of A÷B, protection of the corresponding B÷A may also be considered.

It is worth indicating that technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single-carrier Frequency-Division Multiple Access, SC-FDMA), and other systems. Terms "system" and "network" in the embodiments of this application are usually used interchangeably, and the described technologies may be applied to the systems and radio technologies mentioned above, and may also be applied to other systems and radio technologies. The following description describes a new radio (NR) system for the purpose of an example, an NR term is used in most of the following descriptions though these technologies may also be applied to an application other than an NR system application, such as a 6^{th} Generation (6G) communication system.

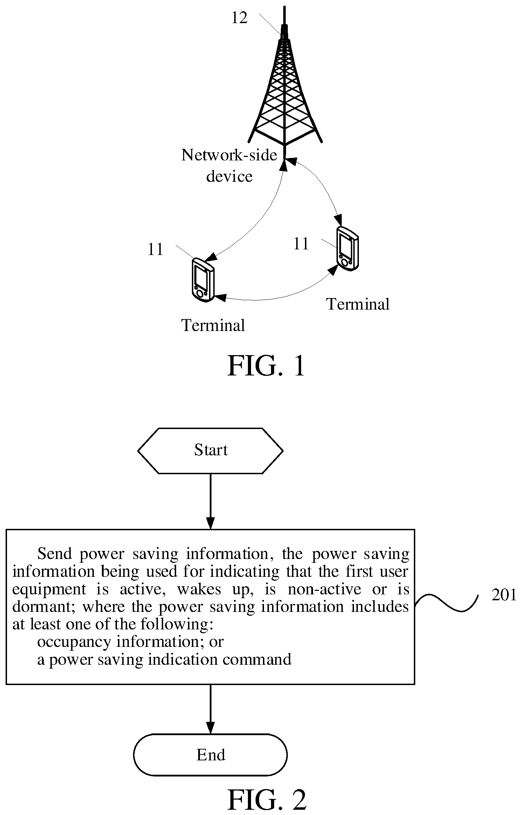

FIG. 1 shows a block diagram of a wireless communication system to which the embodiments of this application are applicable; The wireless communication system includes a terminal 11 and a network-side device 12. The terminal 11 may also be called a terminal device or user equipment (User Equipment, UE). The terminal 11 may be terminal-side devices, such as a mobile phone, a tablet personal computer (Tablet Personal Computer, TPC), a laptop computer (Laptop Computer, LC) or called a notebook computer, a palmtop computer, a netbook, an ultra-mobile personal computer (Ultra-mobile Personal Computer, UMPC), a mobile Internet device (Mobile Internet Device, MID), a wearable device (Wearable Device), or vehicle user equipment (Vehicle User Equipment, VUE), pedestrian user equipment (Pedestrian User Equipment, PUE). The wearable device includes: a wristband, an ear phone, glasses and the like. It needs to be noted that a specific type of the terminal 11 is not limited in the embodiments of this application. The network-side device 12 may be a base station or a core network. The base station may be called NodeB, evolved NodeB, an access point, a base transceiver station (Base Transceiver Station, BTS), a radio base station, a radio transceiver, a basic service set (Basic Service Set, BSS), an extended service set (Extended Service Set, ESS), NodeB, evolved NodeB (eNB), home NodeB, home evolved NodeB, a WLAN access point, a WiFi node, a transmitting receiving point (TRP) or a certain proper one of other terms in the field. The base station is not limited to a specific technical term as long as the same technical effects are achieved. It needs to be noted that only a base station in an NR system is used as an example in the embodiments of this application, but a specific type of the base station is not limited.

The power saving processing method provided by this embodiment of this application is described in detail below through specific embodiments and application scenarios with reference to the accompanying drawings.

The method in this embodiment of this application is applied to user equipment. The user equipment may refer to an access terminal, a user unit, a user station, a mobile station, a mobile table, a remote station, a remote terminal, a mobile device, a user terminal, a terminal, a wireless communication device, a user agent or a user apparatus. The terminal device may also be a cell phone, a cordless telephone, a session initiation protocol (Session Initiation Protocol, SIP) phone, a wireless local loop (Wireless Local Loop, WLL) station, a PDA, a hand-held device with a wireless communication function, a computing device, or other processing devices connected to a radio modem, a vehicle-mounted device and a wearable device.

As shown in FIG. 2, a power saving processing method in an embodiment of this application is executed by first user equipment and includes:
step 201: send power saving information, the power saving information being used for indicating that the first target user equipment is active, wakes up, is non-active or is dormant.

The power saving information includes at least one of the following:
occupancy information; or
a power saving indication command.

In this way, through this step, the first user equipment can inform user equipment receiving the power saving information that the first target user equipment is active, wakes up, is non-active or is dormant currently, so that adjustment of corresponding transmission may be further performed subsequently, and unnecessary power consumption is avoided.

Here, the first user equipment may be marked as UE1, and second user equipment may be marked as UE2. The UE2 is UE communicating with the UE1, UE receiving a signal or a channel of the UE1, UE sending a signal or a channel to the UE1, or UE establishing a connection or a group with the UE1. The first target user equipment may be the UE1, or the UE2, or other devices except for the UE1 and the UE2.

It needs to be noted that in this embodiment of this application, a method for obtaining mentioned information may be:
a) obtaining information in at least one of modes such as protocol predefinition, pre-configuration, base station configuration, other user equipment indication, other user equipment recommendation, other user equipment scheduling and other user equipment configuration; and
b) obtaining information further based on an obtained rule after obtaining the rule according to at least one of modes such as protocol predefinition, pre-configuration, base station configuration, other user equipment indication, other user equipment recommendation, other user equipment scheduling and other user equipment configuration.

A power saving mechanism obtained by the user equipment specifically includes, for example, SL discontinuous reception (Discontinuous Reception, DRX) configuration and/or power saving sensing configuration. The power saving mechanism may be an own power saving mechanism of a user, or may also be a power saving mechanism of other users. Power saving sensing may be partial (partial) sensing, or may also be some simplified, shorter, aperiodic or triggered sensing.

SL DRX may be used for controlling at least one of sensing, measurement, monitoring and transmission for a target object by the user equipment, and the target object contains at least one of the following: a control signal/channel, a data signal/channel, a reference signal, a feedback signal/channel, a request, a response message or the like. For example: sidelink control information (Sidelink Control Information, SCI) (containing at least one of a 1^{st}-stage SCI or 2^{nd}-stage SCI), a physical sidelink shared channel (Physical Sidelink Shared Channel, PSSCH), a physical sidelink control channel (Physical Sidelink Control Channel, PSCCH), an SL reference signal (Reference Signal, RS), a physical sidelink response channel (Physical Sidelink Response Channel, PSFCH), a single synchronization signal and PBCH block (Single Synchronization Signal and PBCH Block, S-SSB), channel state information (Channel State Information, CSI), a connection establishment response and the like.

SL DRX contains at least one of the following time (or may also be called a timer): on duration, off duration (off duration), a round trip time (Round Trip Time, RTT) timer (timer), an inactivity timer (inactivity timer), a retransmission timer (Retransmission timer, a long cycle (long cycle), or a short cycle (short cycle).

SL DRX may be divided into active time and/or non-active time. The user equipment performs at least one of measurement, monitoring or transmission on the target object within the active time, and does not perform at least one of measurement, monitoring or transmission on the target object within the non-active time. Other channels/signals except for the target object may not be affected by DRX. Optionally:

The active time and the non-active time may be defined for the target object, that is, active time of different target objects may the same or not, and non-active time of different target objects may be the same or not. (For example, the UE may perform transmission on a first target object within the active time and does not perform transmission on a second target object within the non-active time. The first target object and the second target object may be the same or not. Active time and non-active time corresponding to the different target objects may the different).
1) There is an assumption that SCI may be sent in any time.
2) Receiving of SCI is limited by active time of DRX, but SCI may be possibly sent in the non-active time but limited by a selection window.

The active time and the non-active time may be defined for a transmission direction, that is, active time of sending and active time of receiving may be the same or not, and non-active time of sending and non-active time of receiving may be the same or not. Certainly, transmission directions of some target objects may have only active time but no non-active time.

Power saving sensing contains a sensing window (sensing window) and a selection window (selection window).

SL DRX active time contains at least one of on duration, inactivity timer run time (when inactivity timer is running (when inactivity timer is running)), retransmission timer run time (when retransmission timer is running (when retransmission timer is running)), T400 run time or side link CSI latency bound CSI report (sl-LatencyBoundCSI-Report) period.

SL DRX non-active time contains at least one of off duration or RTT timer run time.

Power saving sensing active time contains at least one of a sensing window or a selection window.

Power saving sensing non-active time contains at least one of a part free of a partial sensing window (for example, a part between partial sensing windows or beyond the partial sensing window), a part free of the selection window (for example, a part beyond the selection window) or time without sensing.

A measurable resource may be a (logical) resource during active time (corresponding to receiving or sending), and preferably, it is at least active time for receiving of a control channel and/or a data channel, for example, active time for PSCCH and/or PSSCH receiving.

An unmeasurable resource may be a resource during non-active time, and preferably, it is at least non-active time for receiving of a control channel and/or a data channel, for example, non-active time for PSCCH and/or PSSCH receiving.

A resource mentioned in this application contains a time domain and/or a frequency domain resource. The frequency domain resource may be one or a plurality of sub-channels/RBs/interlaces (interlace)/combs (comb) (on one or a plurality of time domain resources). The time domain resource may be one or a plurality of symbols/slots (slot)/mini-slots/milliseconds (ms)/subframes (subframe)/frames (frame)/periodicity (periodicity). The time domain resource may be a physical time domain resource, or may also be a logical time domain resource, for example, a slot may be a physical slot, and may also be a logical slot. The time domain resource may be a single slot resource occupying X sub-channels or RB.

In this application, corresponding may also be construed as having a mapping relationship, an association relationship, a correlation or the like.

In this application, a duration may be understood as a resource number/a measurable resource number/a logical resource number which are contained.

This embodiment of this application is applicable to power saving in an SL scenario under a licensed frequency band and/or an SL scenario under an unlicensed frequency band. This solution may be applied to a scenario that any end of receiving-end UE and sending-end UE needs energy saving (for example, vehicle to pedestrian (vehicle to pedestrian, V2P)), or a scenario that the both ends need energy saving (for example, communication through SL or other interfaces such as peer-to-peer (peer-to-peer, P2P), or passive Internet of Things, PIOT).

In this embodiment of this application, one UE may perform SL receiving or sending respectively in different time points, that is, the UE is sending-end UE (TX UE) or receiving-end UE (RX UE).

It needs to be further noted that in this embodiment, the power saving information may be called a wake up signal (Wake Up Signal WUS), such as, SL WUS. That is, SL WUS includes the occupancy information and/or the power saving indication command.

Optionally, the power saving information is used for indicating at least one of the following:
the power saving indication command;
occupancy information;
an identity related to the first target user equipment;
a power saving mechanism of the first target user equipment;
an effective duration;
a transmission type; or
at least a part of a target resource.

The power saving information indicating the power saving indication command may be indicating that the power saving indication command is in transmission/exists/is contained in current power saving information or other power saving information, for example, indicating that the power saving indication command is in transmission in next power saving information. Since transmission of the occupancy information and the power saving indication command may be performed, or transmission of only the occupancy information may be performed, and whether transmission of the power saving indication command is also performed may need to be indicated while transmission of the power saving information is performed, whether the power saving indication command is in transmission/exists/is contained in the current power saving information or other power saving information may also be indicated, for example, indicating that the power saving indication command does not exist in the current power saving information. Certainly, the power saving information indicating the power saving indication command may be indicating a resource of the power saving indication command. Likewise, if the power saving information indicates the occupancy information, it may be indicating that the occupancy information is in transmission/exists/is contained in the current power saving information or another power saving information; may also be indicating whether the occupancy information is in transmission/exists/is contained in the current power saving information or another power saving information; and may also be indicating a resource of the occupancy information.

As for the power saving information indicating the identity related to the first target user equipment, the related identity may be at least one of an international mobile subscriber identification (International mobile Subscriber Identification, MSI), an international mobile equipment identification (International Mobile Equipment Identification, IMEI), a serving-temporary mobile subscriber identity (Serving-Temporary Mobile Subscriber Identity, S-TMSI), a cell radio network temporary identifier (Cell Radio Network Temporary Identifier, C-RNTI ), a globally unique temporary UE identity (Globally Unique Temporary UE Identity, GUTI) or an Internet protocol address (Internet Protocol Address, IP) of the UE.

As for the power saving information indicating the power saving mechanism of the first target user equipment, optionally, the power saving mechanism of the first target user equipment indicated by the power saving information includes at least one of the following:
active or wake up;
non-active or dormant;
prolonging active or wake up time;
prolonging non-active or dormant time;
ending the active time; or
ending the non-active time.

If the power saving mechanism is configured with a corresponding identity, the power saving information indicates the power saving mechanism of the first target user equipment, and optionally, the power saving mechanism identity may be carried by the power saving information.

Here, in a case that no corresponding timer is arranged, active or wake up (wake up) may be called triggering active or wake up, or ending non-active or sleep (sleep); and in a case that a corresponding timer is arranged, active or wake up may be called starting active or wake up time, or ending the non-active or sleep time. Similarly, in a case that no corresponding timer is arranged, non-active or sleep may be called triggering non-active or sleep, or ending active or wake up; and in a case that a corresponding timer is arranged, non-active or sleep may be called starting non-active or sleep time, or ending the active or wake up time. If the corresponding timer is arranged, the active or wake up time is prolonged or the non-active or dormant time is prolonged for demands of transmission, specifically, time prolonging or early termination (early termination). For example, if SL WUS is before active time, whether next active time is wake up or sleep may be indicated. For example, if SL WUS is before non-active time, whether next non-active time is sleep or is switched to wake up may be indicated. For example, if SL WUS is within the active time, prolonging (also called extending) the active time or making early termination may be performed. For example, if SL WUS is within the non-active time, prolonging the non-active time or making early termination may be performed. For example, if SL WUS is received, it enters the active time. For example, if SL WUS is received before the active time, it starts to enter the active time from SL WUS or SL WUS+offset corresponding position. For example, if SL WUS is received, it enters the non-active time. For example, SL WUS is received before the non-active time, it starts to enter the non-active time from SL WUS or SL WUS+offset corresponding position.

For example, target UE is the UE1 and/or other UE, and a power saving mechanism of the UE1 per se and/or other UE may be indicated.

As for the power saving information indicating the effective duration, the effective duration may be effective time of the power saving information or the power saving indication command, specifically may be: N active time, M periodicities, permanent, till before next time transmission of the power saving information or the power saving indication command, and the like. For example, it indicates that the effective duration is the N active time, that is, the power saving information or the power saving indication command is effective for the next N active time, so if the power saving information indicates sleep, the user remains sleeping in the next N active time.

As for the power saving information indicating the transmission type, the transmission type indicates a next service needing to be performed possibly or that transmission is a periodic and/or aperiodic transmission. For example, if the TX UE performs transmission of a periodic service within a period of time, the RX UE may need to remain active in each active time within the period of time, at the moment, the TX UE may send a piece of power saving information indicating that the transmission type is periodic, so the target UE (namely, a power saving information receiving end, such as all RX UE) wakes up in periodicities, and the power saving information does not need to be sent in each periodicity.

As for the power saving information indicating at least a part of a target resource, at least a part of the target resource is at least a part of a target resource associated with the power saving information. Here, indicating at least a part of the target resource may also be called reserving at least a part of the target resource. In an implementation, at least a part of the target resource indicated by the power saving information may contain a resource of the power saving information per se. In an implementation, at least a part of the target resource reserved by the power saving information may contain a periodic resource corresponding to a certain resource or some resources.

Optionally, at least a part of a resource in at least a part of the target resource indicated by the power saving information is the periodic resource.

That is, the power saving information reserves at least a part of a resource in at least a part of the target resource. Specifically, it includes at least a part of a resource in a reserving periodicity of at least a part of the target resource of the occupancy information, and/or at least a part of a resource in a reserving periodicity of at least a part of the target resource of the power saving indication command. For example, if the power saving information reserves P periodicities of the target resource (may also be construed as indicating a periodic target resource), it may be that the occupancy information indicates/reserves P1 periodicities of the target resource, and/or the power saving indication command indicates/reserves P2 periodicities of the target resource, where P1 and P2 are each greater than or equal to 0, and smaller than or equal to P; it may also be that the occupancy information indicates/reserves P periodicities of the target resource; and it may further be that the power saving indication command indicates/reserves P periodicities of the target resource.

Certainly, in this embodiment, the power saving information indicating at least a part of the target resource may also be construed as aperiodic reserving at least a part of the target resource. The power saving information indicating at least a part of the target resource may specifically contain: the occupancy information indicating at least a part of the target resource, and/or the power saving indication command indicating at least a part of the target resource.

For example, the power saving information indicates M target resources (the M target resources may also be construed as a target resource set), so a specific implementation may be:
1) the occupancy information indicating M1 target resources, and/or the power saving indication command indicating M2 target resources, where M1 and M2 are greater than or equal to 0, and smaller than or equal to M;
2) if the power saving information contains the occupancy information, the occupancy information indicating M target resources;
3) if the power saving information contains only the power saving indication command, the power saving indication command indicating the M target resources.

It needs to be noted that in this embodiment, an indication mode of the power saving information includes an explicit indication and an implicit indication, and taking indicating the identity related to the first target user equipment as an example, the power saving information, when being in transmission by using different sequences or time-frequency resources, corresponds to different UE related identities respectively, that is, the UE related identities are implicitly indicated correspondingly; and the power saving information carries UE related identity indication domains, so the UE related identities are explicitly indicated through a content of the UE related identity indication domains. Certainly, an indication mode of other information may also include the explicit indication and the implicit indication, which will not be repeated here.

Optionally, the occupancy information is used for indicating at least one of the following:
the power saving indication command;
an identity related to the first target user equipment;
an effective duration;
a transmission type; or
at least a part of a target resource.

Here, the power saving information also includes the occupancy information, so indication of the occupancy information is indication of the power saving information. Indicating the power saving indication command may be indicating that the power saving indication command is in transmission/exists/is contained in the current power saving information or another power saving information, for example, indicating that transmission of the power saving indication command is performed in next power saving information. Since transmission of the occupancy information and the power saving indication command may be performed, or transmission of only the occupancy information may be performed, and whether transmission of the power saving indication command is also performed may need to be indicated while transmission of the power saving information is performed, whether the power saving indication command is in transmission/exists/is contained in the current power saving information or other power saving information may also be indicated, for example, indicating that the power saving indication command does not exist in the current power saving information. Certainly, the power saving information indicating the power saving indication command may be indicating a resource of the power saving indication command. Specifically, indicating the power saving indication command is that (for example, equipment receiving the occupancy information is informed that) transmission of the power saving indication command or SL WUS has been performed (such as sent), or the power saving indication command or SL WUS exists.

As for indicating the identity related to the first target user equipment, the related identity may be at least one of MSI, IMEI, S-TMSI, C-RNTI, GUTI or IP of the UE. The occupancy information, when being in transmission by using different sequences or different time-frequency resources, corresponds to different UE related identities respectively, so that the UE related identities may be indicated implicitly through the occupancy information, or the occupancy information carries the UE related identity indication domains. Therefore, specific implementations of the occupancy information indicating the above various items are the same as those of the indication of the power saving information, which will not be repeated here.

The power saving mechanism of the first target user equipment indicated by the occupancy information includes at least one of the following: active or wake up; non-active or dormant; prolonging active or wake up time; prolonging non-active or dormant time; ending the active time; or ending the non-active time. If the power saving mechanism is configured with the corresponding identity, the power saving information indicates the power saving mechanism of the first target user equipment, and optionally, the power saving mechanism identity may be carried by the occupancy information.

As for the occupancy information indicating the effective duration, the effective duration may be effective time of the power saving information or the power saving indication command, specifically may be: N active time, M periodicities, permanent, till before next time transmission of the power saving information or the power saving indication command, and the like. For example, it indicates that the effective duration is the N active time, that is, the power saving information or the power saving indication command is effective for the next N active time, so if the power saving information indicates sleep, the user remains sleeping in the next N active time.

As for the occupancy information indicating the transmission type, the transmission type indicates a next service needing to be performed possibly or that transmission is a periodic and/or aperiodic transmission. For example, if the TX UE performs transmission of a periodic service within a period of time, the RX UE may need to remain active in each active time within the period of time, at the moment, the TX UE may send a piece of occupancy information indicating that the transmission type is periodic, so the target UE (namely, the power saving information receiving end, such as all the RX UE) wakes up in periodicities, and the power saving information does not need to be sent in each periodicity.

As for the occupancy information indicating at least a part of a target resource, at least a part of the target resource is at least a part of a target resource associated with the power saving information. Here, indicating at least a part of the target resource may also be called reserving at least a part of the target resource. In an implementation, at least a part of the target resource indicated by the occupancy information may contain a resource of the occupancy information per se. In an implementation, at least a part of the target resource reserved by the occupancy information may contain a periodic resource corresponding to a certain resource or some resources. At least a part of the target resource indicated by the occupancy information may be the same as at least a part of the target resource of the power saving information or not.

Therefore, if the power saving indication command carries too many bits, a blind test for the power saving indication command by the UE may cause high complexity and power consumption, and the relatively simple occupancy information firstly indicates whether there is the power saving indication command, so that the unnecessary blind test for the power saving indication command by the UE is avoided, and thus power consumption is reduced. At the moment, the occupancy information may be some relatively simple physical layer signals or some physical layer signals carrying a small number of bits, for example, SCI, a specific sequence or RS; and it may also be that a resource occupied by the power saving indication command needs to be indicated by the occupancy information, for example, when the power saving indication command is a PSSCH, the occupancy information may be SCI and indicates a resource used by the PSSCH.

Optionally, the power saving indication command is used for indicating at least one of the following:
a current and/or another power saving indication command;
occupancy information;
a power saving mechanism of the first target user equipment;
an identity related to the first target user equipment;
an effective duration;
a transmission type; or
at least a part of a target resource.

Here, the power saving information may include the power saving indication command, so the indication of the power saving indication command is the indication of the power saving information. Indicating the current power saving indication command may indicate that the power saving indication command is in transmission/exists/is contained in the current power saving information or another power saving information, for example, indicating that transmission of the power saving indication command is performed in next power saving information. Since transmission of the occupancy information and the power saving indication command may be performed, or transmission of only the occupancy information may be performed, and whether transmission of the power saving indication command is also performed may need to be indicated while transmission of the power saving information is performed, whether the power saving indication command is in transmission/exists/is contained in the current power saving information or other power saving information may also be indicated, for example, indicating that the power saving indication command does not exist in the current power saving information. Certainly, the power saving information indicating the power saving indication command may be indicating a resource of the power saving indication command. Specifically, indicating the power saving indication command is self indicating, for example, (for example, the equipment receiving the power saving information is informed that) the power saving indication command exists in the received current power saving information; and indicating the another power saving indication command may be that (for example, the equipment receiving the power saving information is informed that) transmission of the power saving indication command has been performed before the received current power saving information, or whether transmission of the power saving indication command is performed before or after the received current power saving information. Likewise, if it indicates that the power saving indication command indicates the occupancy information, it may indicate that the occupancy information is in transmission/exists/is contained in the current power saving information or another power saving information; may also be indicating whether the occupancy information is in transmission/exists/is contained in the current power saving information or another power saving information; and may also be indicating a resource of the occupancy information.

As for indicating the identity related to the first target user equipment, the related identity may be at least one of MSI, IMEI, S-TMSI, C-RNTI, GUTI or IP of the UE. The transmission of the power saving indication command is performed by using different sequences or the transmission of the occupancy information is performed by using different time-frequency resources, which correspond to different UE related identities respectively, so that the UE related identities may be indicated implicitly through the power saving indication command, or the occupancy information carries the UE related identity indication domains.

The indicated power saving mechanism of the first target user equipment includes at least one of the following: active or wake up; non-active or dormant; prolonging active or wake up time; prolonging non-active or dormant time; ending the active time; or ending the non-active time. If the power saving mechanism is configured with the corresponding identity, the power saving indication command indicates the power saving mechanism of the first target user equipment, and optionally, the power saving mechanism identity may be carried by the power saving indication command.

As for indicating the effective duration, the effective duration may be effective time of the power saving information or the power saving indication command, specifically may be: N active time, M periodicities, permanent, till before next time transmission of the power saving information or the power saving indication command, and the like. For example, it indicates that the effective duration is the N active time, that is, the power saving information or the power saving indication command is effective for the next N active time, so if the power saving information indicates sleep, the user remains sleeping in the next N active time.

As for indicating the transmission type, the transmission type indicates a next service needing to be performed possibly or that transmission is a periodic and/or aperiodic transmission. For example, if the TX UE performs transmission of a periodic service within a period of time, the RX UE may need to remain active in each active time within the period of time, at the moment, the TX UE may send a power saving indication command indicating that the transmission type is periodic, so the target UE (namely, for example, the power saving indication command receiving end, such as all the RX UE) wakes up in periodicities, and the power saving indication command does not need to be sent in each periodicity.

As for indicating at least a part of the target resource, at least a part of the target resource is at least a part of a target resource associated with the power saving information. Here, indicating at least a part of the target resource may also be called reserving at least a part of the target resource. In an implementation, at least a part of the target resource indicated by the power saving indication command may contain a resource of the power saving indication command per se. In an implementation, at least a part of the target resource reserved by the power saving indication command may contain a periodic resource corresponding to a certain resource or some resources. At least a part of the target resource indicated by the power saving indication command may be the same as at least one of at least a part of the target resource of the power saving information or at least a part of the target resource indicated by the occupancy information.

It needs to be noted that if the power saving indication command carries few bits, or an indicated information content is relatively simple, or the UE can have prior information of the power saving indication command (for example, the UE can know in advance a resource location actually used by the power saving indication command), transmission of only the power saving indication command may be performed, that is, the power saving information includes only the power saving indication command.

Besides, optionally, in this embodiment, the power saving information is associated with the target resource.

Here, the target resource includes one or a plurality of resources.

Specifically, the target resource associated with the power saving information includes at least one of the following: a resource where the power saving information is located; or a resource except for the resource where the power saving information is located.

The resource where the power saving information is located may also be understood as a resource where the current power saving information, current occupancy information or current power saving indication command is located. For example, the target resource contains only the resource where the current power saving information, current occupancy information or current power saving indication command is located, that is, equivalently, the power saving information only indicates the resource used by itself.

The resource except for the resource where the power saving information is located may also be understood as a resource after the current power saving information, current occupancy information or current power saving indication command. For example, the occupancy information indicates M1 target resources except for the resource where itself is located, further optionally, the M1 target resources are (candidate) resources of the power saving indication command, that is, may be used for the transmission of the power saving indication command. For another example, the power saving information ( occupancy information and/or power saving indication command) indicate(s) M2 target resources except for the resource where itself is located, further optionally, the M2 target resources are candidate resources of data, that is, may be used for the transmission of the data.

Optionally, an associated mode of the power saving information and the target resource includes at least one of the following that:
a corresponding relationship exists between the power saving information and at least a part of the target resource;
a corresponding relationship exists between the resource of the power saving information and at least a part of the target resource;
the transmission of the power saving information and a target transmission on at least a part of the target resource need to be performed; or
the power saving information indicates at least a part of the target resource.

Here, the transmission of the power saving information and the target transmission on at least a part of the target resource needing to be performed, that is, the transmission of the power saving information and the target transmission on at least a part of the target resource are performed together. Specifically, it may be that the power saving information and the target transmission are performed on the same resource (such as a time domain resource and/or a frequency domain resource); and it may also be that the power saving information and the target transmission are on different time domain resources and/or different frequency domain resources, but transmission of the power saving information and the target transmission need to be performed. A number ratio of the power saving information and the target transmission may be one to multiple, multiple to one, or one to one. The power saving information and the target transmission being on the same time domain resource and/or the same frequency domain resource may also be construed as the target transmission carrying the power saving information. Certainly, no matter whether the power saving information and the target transmission are on the same resource, if the power saving information does not indicate/reserve the target resource which is to be in transmission together, further preferably, the target resource may be obtained in a mode such as configuration/pre-configuration/protocol stipulation. For example, transmission of the power saving information is performed on a resource 1, and a protocol stipulates that a resource 2 corresponds to the resource 1, so the resource 2 is the target resource associated with the power saving information.

As for the power saving information indicating at least a part of the target resource, the power saving information and at least a part of the target resource indicated thereby may have a corresponding relationship or may be in transmission together, and may also have no corresponding relationship or may not be in transmission together, which will not be listed one by one here.

At least a part of the target resource indicated by the power saving information includes at least one of the following: a resource where the power saving information is located; or a resource except for the resource where the power saving information is located.

The resource where the power saving information is located and the resource except for the resource where the power saving information is located are understood as described above.

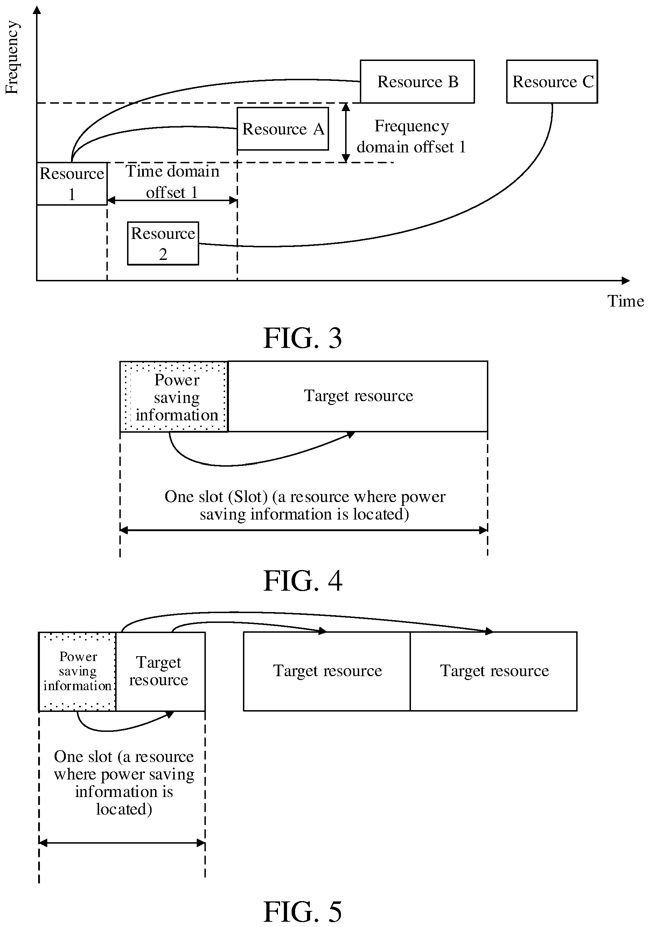

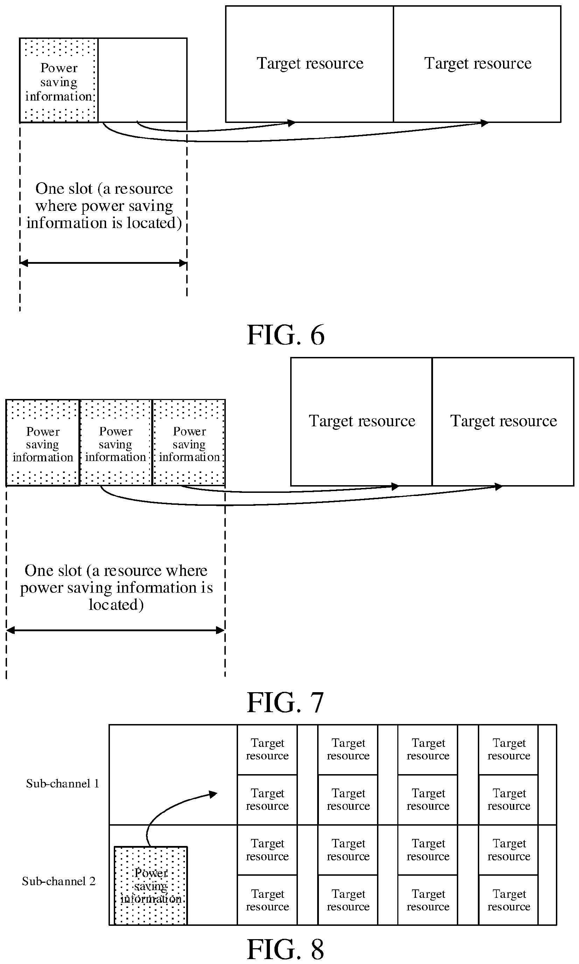

Optionally, the power saving information indicating at least a part of the target resource may be implemented as follows:
1) as shown in FIG. 4, the target resource indicated/reserved by the power saving information contains the resource where the current power saving information is located. Specifically, a slot where the current power saving information is located may be indicated.
2) as shown in FIG. 5, the target resource indicated/reserved by the power saving information contains the resource where the current power saving information is located or a resource thereafter. Specifically, the slot where the current power saving information is located and a plurality of slots thereafter may be indicated.
3) as shown in FIG. 6 and FIG. 7, the target resource indicated/reserved by the power saving information contains the resource after the resource where the current power saving information is located. Specifically, the plurality of slots after the slot where the current power saving information is located may be indicated. Within the slot where the power saving information is located and a sub-channel where the power saving information is located, a part except for the resource occupied by the power saving information may be idle and not be used for transmission (as shown in FIG. 6) or performs repeating of the power saving information (as shown in FIG. 6).

As for the target resource associated with the power saving information, optionally, a type of the target resource includes at least one of the following:
a resource of the occupancy information;
a resource of the power saving indication command;
a resource of the target transmission; or
an idle resource.

In other words, a purpose of the target resource includes at least one of the following: transmission of the occupancy information; transmission of the power saving indication command; transmission of the target transmission; or idleness. Certainly, the target resource, also serving as a candidate resource of at least one of the occupancy information, the power saving indication command or the target transmission, is not necessarily used for transmission of information. Therefore, if the target resource is the resource of the target resource, the target resource is used for the target transmission, or the target resource is the (candidate) resource of the target transmission. If the target resource is at least one of the resource of the occupancy information or the resource of the power saving indication command, the target resource is used for performing transmission of at least one of the occupancy information or the power saving indication command, or the target resource is the (candidate) resource of at least one of the occupancy information or the power saving indication command. If the target resource is at least two of the resource of the target transmission, the resource of the occupancy information, and the resource of the power saving indication command, the target resource is used for at least two of the target transmission, the occupancy information and the power saving indication command, or the target resource contains (candidate) resources of at least two of the target transmission, the occupancy information and the power saving indication command.

The occupancy information and the power saving indication command may be occupancy information and a power saving indication command in the current power saving information, that is, the current occupancy information and the current power saving indication command; or the occupancy information and the power saving indication command may be occupancy information and a power saving indication command in the another power saving information, that is, another occupancy information and another power saving indication command. The target transmission may be at least one of a target control, target data or a target feedback. The target data may be construed as a data transmission indicated/reserved by the power saving information (occupancy information and/or the power saving indication command) and may be any data content or a specific data content. The target control may be control information indicating or scheduling or reserving the target data. The target feedback may be construed as a feedback related to the power saving information and may be specifically a hybrid automatic repeat request acknowledgement (Hybrid automatic repeat request acknowledgement, HARQ-ACK), or may also be a response message (response).

Idleness may be understood as that the target resource is not used for transmission, so the idle resource includes at least of the following: a first signal/channel, or any signal/channel is not in transmission on the idle resource (by equipment sending the power saving information); or a second signal/channel, or any signal/channel cannot be in transmission on the idle resource (by specific equipment receiving the power saving information or any equipment receiving the power saving information).

Besides, the target resource may also be understood as being capable of being used for the transmission of the power saving information and/or the target transmission, or being not used for transmission. For example, transmission of the power saving information is performed on SCI, a resource indication domain carried by the power saving information may be used for indicating the target resource, thereby being recognized by the UE receiving the power saving information, thus the UE believes that the target resource is occupied, a situation that a resource used by the UE has a conflict with the sub-channel where the power saving information is located is avoided, and how to use the target resource may be flexible.

Optionally, in a case that the occupancy information and/or the power saving indication command indicate(s) at least a part of the target resource, at least a part of the target resource includes at least one of the following:
a resource of the occupancy information;
a resource of the power saving indication command;
a resource of the target transmission; or
an idle resource.

Like the above target resource, here, it may also be understood as that a purpose of at least a part of the target resource indicated by the occupancy information and/or the power saving indication command indicates at least one of the following: transmission of the occupancy information; transmission of the power saving indication command; transmission of the target transmission; or idleness. Certainly, the indicated at least a part of the target resource may also serve as a candidate resource of at least one of the occupancy information, the power saving indication command or the target transmission and is not necessarily used for transmission of information.

That is, the (candidate) resource for indicating the occupancy information and/or the power saving indication command, namely the indicated at least a part of the target resource, may be used for the transmission of the occupancy information and/or the power saving indication command, for example: the occupancy information indicates/reserves the (candidate) resource of the power saving indication command, that is, the indicated/reserved at least a part of the target resource may be used for the transmission of the power saving indication command. For example: the (candidate) resource for indicating the target transmission, namely the indicated at least a part of the target resource, may be used for the target transmission, for example: the occupancy information indicates the (candidate) resource of the target data, and the resource may be used for transmission of the target data. For example: the power saving indication command indicates the (candidate) resource of the target data, and the resource may be used for transmission of the target data. For example: the idle resource is indicated, that is, the indicated at least a part of the target resource is not used for transmission or not used for transmission of a specific signal.

For example, at least a part of the target resource indicated by the occupancy information may be a target resource used for the transmission of the power saving indication command.

Optionally, a content of the target transmission includes:
a specific message, or any message.

The specific message includes at least one of the following:
a message with a target content;
a message corresponding to the first target user equipment;
a redundant message;
an invalid message;
a flag message;
a beacon message; or
a valid message.

Here, the target content is a message content with a specific meaning. The redundant message or the invalid message may be an all-0 bit string with a fixed length or a fixed resource occupying size, or may also be an all-1 bit string with a fixed length or a fixed resource occupying size, or a bit string with a fixed length and/or a fixed content, for example, a bit string with fixed 11001100. The valid message may be a packet/TB, MAC CE, RRC signaling related to a service, and the like. Any message may be understood as that UE self-determines a carried content, or understood as a message corresponding to any UE.

Optionally, a content carried by the target transmission is indicated by the power saving information.

That is, the above content carried by the target transmission is indicated by the occupancy information and/or the power saving indication command. For example, it indicates that the target transmission is the valid message, or indicates that the target transmission is a message corresponding to the target UE. The target UE may be understood as the first target user equipment.

Optionally, the method further includes:
obtaining type indication information of the target resource, the type indication information being used for indicating a type of the target resource.

Therefore, by obtaining the type indication information of the target resource, the first user equipment may determine the type of the target resource according to the type indication information. Certainly, the type indication information may be understood as purpose indication information, and the purpose of the target resource is determined according to the purpose indication information.

Optionally, the power saving information includes the type indication information of the target resource.

In other words, the power saving information includes the purpose indication information of the target resource, that is, the occupancy information and/or the power saving indication command carry/carries the type indication information/purpose indication information of the target resource. For example, the type indication information/purpose indication information of the target resource is carried in the occupancy information, so as to indicate the type/purpose of the target resource.

Besides, optionally, in this embodiment, the power saving information indicating at least a part of the target resource is indicating at least a part of the target resource through the occupancy information and/or the power saving indication command.

In other words, the power saving information indicating at least a part of the target resource may be indicating at least a part of the target resource independently by the occupancy information, or indicating at least a part of the target resource independently by the power saving indication command, or indicating at least a part of the target resource jointly by the occupancy information and the power saving indication command.

Specifically, the occupancy information and/or the power saving indication command may be used for at least one of the following:
indicating related information of at least a part of the target resource, where
indicating may be explicit or implicit. Specifically, the related information of at least a part of the target resource includes a location of the target resource, a time domain offset, a frequency domain offset, an occupying duration, an occupying bandwidth, the number of occupied frequency domain resources, a priority or the number and the like. If the indicated at least a part of the target resource is a periodic resource, the related information may also include a reserving periodicity of the target resource, that is, periodicity of at least a part of the target resource.

Optionally, a mode that the occupancy information and/or the power saving indication command indicate(s) at least a part of the target resource includes at least one of the following that:
a corresponding relationship exists between at least a part of the target resource, and at least one of the occupancy information and/or the power saving indication command; or
a target indication domain of the occupancy information and/or the power saving indication command indicates related information of at least a part of the target resource.

That is, a related information domain in the occupancy information and/or the power saving indication command indicates the related information of at least a part of the target resource (explicit indication), and the corresponding relationship exists between at least a part of the target resource, and at least one of the occupancy information and the power saving indication command, so that at least a part of the target resource indicated by the power saving information may be determined according to the corresponding relationship (implicit indication). Certainly, a mode that the power saving information indicates at least a part of the target resource is also indicating the related information of at least a part of the target resource through a related information domain in the power saving information (explicit indication), and the corresponding relationship exists between the power saving information and at least a part of the target resource, so that at least a part of the target resource indicated by the power saving information may be determined according to the corresponding relationship (implicit indication).

Optionally, the target indication domain includes at least one of the following:
a resource indication domain, used for indicating at least a part of the target resource;
an indication domain for the number of resources, used for indicating the number of at least a part of the target resource;
a priority indication domain, used for indicating a priority of at least a part of the target resource; or
a periodicity indication domain, used for indicating the periodicity of at least a part of the target resource.

Here, the related information domain includes at least one of the resource indication domain, the indication domain for the number of resources, the priority indication domain or the periodicity indication domain. It is determined that at least a part of the target resource indicated by the power saving information may be understood as determining the related information domain in the power saving information indicating at least a part of the target resource according to at least a part of the target resource.

In other words, the resource indication domain of the occupancy information and/or the power saving indication command indicates at least a part of the target resource;
the indication domain for the number of resources of the occupancy information and/or the power saving indication command indicates the number of at least a part of the target resource;
the priority indication domain of the occupancy information and/or the power saving indication command indicates the priority of at least a part of the target resource; and
the periodicity indication domain of the occupancy information and/or the power saving indication command indicates the periodicity of at least a part of the target resource.

Taking the power saving information as an example, the resource indication domain in the power saving information may include: time domain resource indication information, used for indicating a time domain resource where at least a part of the target resource is located; and/or frequency domain resource indication information, used for indicating a frequency domain resource where at least a part of the target resource is located. For example, a TRI domain in SCI is reused for indicating the time domain resource where at least a part of the target resource is located. For example, an FRI domain in SCI is reused for indicating the frequency domain resource where at least a part of the target resource is located. For example, the indication domain for the number of resources in the power saving information includes indication information for the number of resources which is used for indicating the number of at least a part of the target resource. For example, the priority indication domain in the power saving information includes priority indication information which is used for indicating the priority of at least a part of the target resource. For example, the periodicity indication domain in the power saving information includes periodicity indication information which is used for indicating the periodicity of at least a part of the target resource.

Optionally, in this embodiment, at least a part of the target resource indicated by the power saving information includes:
a target resource associated with the power saving information;
a resource for the transmission of the power saving information; and
a resource containing at least a part of a frequency domain resource for the power saving information transmission.

That is, at least a part of the target resource indicated by the power saving information is at least one of the target resource associated with the power saving information, the resource for the transmission of the power saving information or the resource containing at least a part of the frequency domain resource for the power saving information transmission. Here, the resource for the transmission of the power saving information is a target resource actually used for the transmission of the power saving information, for example, the power saving information is associated with 10 target resources, but only one target resource A is actually used for the transmission of the power saving information, so the power saving information only indicates the one target resource A. The resource containing at least a part of the frequency domain resource for the power saving information transmission may be I sub-channels/RBs containing a sub-channel where the power saving information is located. Preferably, the resource containing at least a part of the frequency domain resource for the power saving information transmission is I sub-channels/RBs with the sub-channel where the power saving information is located as a start or an end, for example, the number of sub-channels/RBs from the sub-channel where the power saving information is located to a sub-channel/RB of a boundary of the target resource, and the boundary sub-channel/RB is a start or end sub-channel.

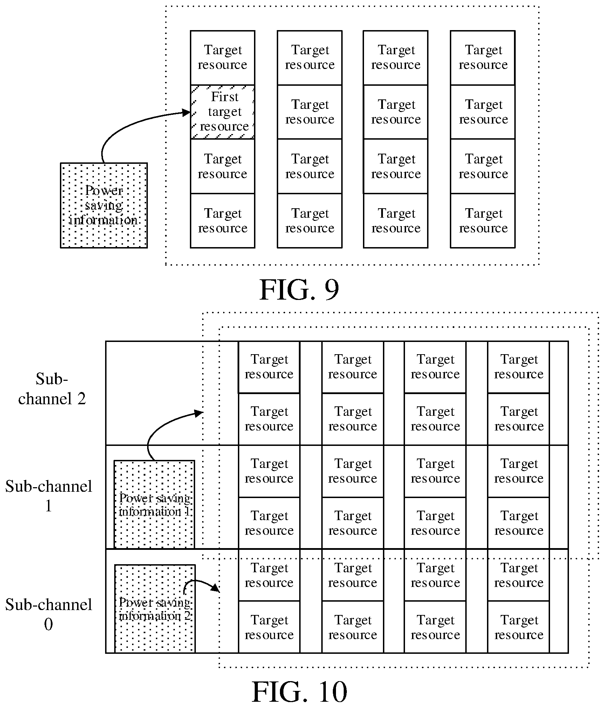

Optionally, the power saving information indicating at least a part of the target resource may be implemented as follows:
1) as shown in FIG. 8, the power saving information is associated with 16 target resources, and the power saving information indicates the target resources of sub-channels 1 and 2 in the figure;
2) as shown in FIG. 9, the power saving information is associated with 16 target resources, and the power saving information indicates a first target resource in the figure;
3) as shown in FIG. 10, the power saving information indicates target resources from the sub-channel where the power saving information is located to within the boundary of the target resources. The power saving information 1 and the power saving information 2 are both associated with 24 target resources shown, and the power saving information 1 indicates the target resources from the sub-channel 1 where the power saving information 1 is located to the boundary of the target resources, that is, the target resources in the sub-channels 1 and 2 are indicated. The power saving information 2 indicates the target resources from a sub-channel 0 where the power saving information 2 is located to the boundary of the target resources, that is, the target resources in the sub-channels 0, 1 and 2 are indicated.

Optionally, in this embodiment, the power saving mechanism of the first target user equipment indicated by the power saving indication command includes at least one of the following:
active or wake up;
non-active or dormant;
prolonging active or wake up time;
prolonging non-active or dormant time;
ending the active time; or
ending the non-active time.

Here, the power saving mechanism of the first target user equipment indicated by the power saving indication command is similar to the above power saving mechanism of the first target user equipment indicated by the power saving information, certainly, the power saving mechanism of the first target user equipment indicated by the occupancy information is also similar to the above power saving mechanism of the first target user equipment indicated by the power saving information, and a specific content will not be repeated here.

Besides, optionally, in this embodiment, the power saving information is associated with at least one of the following:
one or a plurality of DRXs; or
one or a plurality of user equipment.

It may also be understood as that the occupancy information and/or the power saving indication command are/is associated with at least one of the following: one or a plurality of DRXs; or one or a plurality of user equipment. The one or plurality of DRXs may be preset one or plurality of DRXs, or may also be any one or plurality of DRXs. The one or plurality of user equipment may be preset one or plurality of user equipment, or may also be any one or plurality of user equipment. Therefore, one SL WUS may be used for controlling one DRX or one UE; one SL WUS may be used for controlling the plurality of DRXs or the plurality of UE; one SL WUS may be used for controlling a latest DRX after the SL WUS moment; and one SL WUS may be used for controlling all the DRXs.

Besides, optionally, in this embodiment, a priority of the power saving information is a priority of the occupancy information and/or a priority of the power saving indication command.

Certainly, if a priority and the priority of the power saving indication command are known and different, and preferably, the priority of the power saving information is a priority higher than or lower than the priority of the occupancy information and the priority of the power saving indication command.

The priority of the power saving information is:
a first priority;
a priority of the resource where the power saving information is located; or
a priority of the target resource associated with the power saving information.

In other words, the priority of the occupancy information and the priority of the power saving indication command may be the first priority; a priority of the resource where the power saving information is located; or the priority of the target resource associated with the power saving information.

Here, the first priority is a specific priority and may be a priority determined in at least one of modes of (pre) configuration, configuration and protocol stipulation, for example, a protocol stipulates that an SL WUS priority is 1, or the lowest priority or the highest priority. The priority of the target resource associated with the power saving information may be a priority of indicated a part of the target resource. In view of a plurality of resources with different priorities, preferably, the priority of the target resource associated with the power saving information is the highest or lowest priority in priorities of target resources associated with the power saving information, or the priority of the target resource associated with the power saving information is the highest or lowest priority in priorities of indicated a part of target resources. For example, the priority of the power saving information is a priority of a target transmission (such as target data) on a part of the target resource indicated by the power saving information and may be the highest or lowest priority in priorities of the target transmission.

Besides, optionally, in this embodiment, before step 201, the method further includes:
determining a first candidate resource of the power saving information; and
determining a resource of the power saving information according to the first candidate resource.

At the moment, the determined resource of the power saving information is a resource actually used for the transmission of the power saving information.

Optionally, the first candidate resource includes: a resource of second target user equipment.

Here, the second target user equipment may be the first target user equipment, or may also be user equipment except for the first target user equipment. The first candidate resource includes the resource of the second target user equipment, or may also be understood as not excluding the resource of the second target user equipment or being capable of selecting the resource of the second target user equipment when a (candidate) resource of the power saving information is determined. Certainly, determining the first candidate resource of the power saving information may also be understood as determining a first candidate resource of the occupancy information and/or the power saving indication command.

For example, when one UE needs to perform transmission of the power saving information/occupancy information/power saving indication command, during selection/reselection/determining of their (candidate) resources, the resource of the second target user equipment is not excluded or may be selected. During selection/reselection/determining of the (candidate) resource of the occupancy information, the resource of the second target user equipment may not be excluded or may be selected, and in this way, different users may select the same resource for the transmission of the occupancy information. Thus, the plurality of users send the occupancy information in a form of SFN, and further, if pieces of occupancy information sent by the plurality of UE are the same, equivalently, total power of the occupancy information is increased, so reliability is improved.

Optionally, in this embodiment, the method further includes: determining a second candidate resource of non-power-saving information in a case that the transmission of the non-power-saving information needs to be performed.

Here, the non-power-saving information is normal data and/or control information, or may also be understood as information except for the power saving information/occupancy information/power saving indication command.

Optionally, the second candidate resource includes at least one of the following:
an associated resource of the non-power-saving information; or
a resource of second target user equipment.

Like the above first candidate resource, the second candidate resource includes the resource of the second target user equipment, or may also be understood as not excluding the resource of the second target user equipment or being capable of selecting the resource of the second target user equipment when a (candidate) resource of the non-power-saving information is determined, or considering that the resource of the second target user equipment may be used for/belong to the (candidate) resource of the non-power-saving information.

For example, when one UE needs to perform transmission of the non-power-saving information (such as normal data and/or the control information), during sensing/resource excluding/resource selection/resource reselection/reevaluation/preempting/determining of its (candidate) resource, the resource of the second target user equipment may not be excluded or may be selected, or it is considered that the resource of the second target user equipment may be used for/belong to the (candidate) resource of the non-power-saving information.

The second candidate resource includes the associated resource of the non-power-saving information, and the associated resource of the non-power-saving information is a resource which may be used for the transmission of the non-power-saving information and set in a mode such as configuration/pre-configuration/protocol stipulation.

Optionally, the second candidate resource does not trigger at least one of resource excluding, reselection, reevaluation or preempting.

Specifically, if the resource of the second target user equipment and the (candidate) resource of the non-power-saving information at least partially overlap, at least one of resource excluding, reselection, reevaluation and preempting is not triggered. Certainly, if the resource of the second target user equipment and the (candidate) resource of the non-power-saving information at least partially overlap, the second candidate resource may include the resource of the second target user equipment.

In this way, the resource of the power saving information may still be used for transmission of the normal data/control information and is neither excluded in a process of selecting a transmission resource for the normal data/control information, nor is the UE triggered to reselect a resource of the normal data/control information due to overlapping of the resource of the normal data/control information and the resource of the power saving information.

Besides, optionally, in this embodiment, the second candidate resource does not include at least one of the following:
an associated resource of the non-power-saving information; or
a resource of second target user equipment.

The second candidate resource does not include the resource of the second target user equipment, or may also be understood as excluding the resource of the second target user equipment or not selecting the resource of the second target user equipment when the (candidate) resource of the non-power-saving information is determined, or it is considered that the resource of the second target user equipment may not be used for/not belong to the (candidate) resource of the non-power-saving information.

For example, when one UE needs to perform transmission of the non-power-saving information (such as the normal data and/or control information), during sensing/resource excluding/resource selection/resource reselection/reevaluation/preempting/determining of its (candidate) resource, the resource of the second target user equipment is excluded or not selected, or it is considered that the resource of the second target user equipment may not be used for/not belong to the (candidate) resource of the non-power-saving information.

The second candidate resource does not include the associated resource of the non-power-saving information, the associated resource of the non-power-saving information is the resource which may be used for the transmission of the non-power-saving information and set in a mode such as configuration/pre-configuration/protocol stipulation, so when the (candidate) resource of the non-power-saving information is determined, the associated resource of the non-power-saving information is excluded or not selected, or it is considered that the associated resource of the non-power-saving information may not be used for/not belong to the (candidate) resource of the non-power-saving information.

Optionally, the second candidate resource triggers resource excluding, reselection, reevaluation or preempting.

Specifically, if the resource of the second target user equipment and the (candidate) resource of the non-power-saving information at least partially overlap, resource excluding, reselection, reevaluation or preempting is triggered.

In this way, the resource of the power saving information is not occupied/indicated/reserved by the resource of the normal data/control information, resource reselection is triggered if there is overlapping, and similarly, a dedicated resource is provided for the occupancy information.

Optionally, the non-power-saving information is used for indicating at least one of the following:
a resource except for at least a part of the target resource indicated by the power saving information;
a resource except for at least a part of a resource in the target resource associated with the power saving information; or
a resource except for the resource of the second target user equipment.

In other words, the non-power-saving information may not indicate at least one of the following: at least a part of the target resource indicated by the power saving information; at least a part of the resource in the target resource associated with the power saving information; or a resource of second target user equipment.

Specifically, the non-power-saving information may be normal SCI, and a format of the normal SCI may be SCI format 1-A/2-A/2-B.

Optionally, the method further includes:
performing, in a case that the associated resource of the non-power-saving information and the resource of the second target user equipment at least partially overlap, rate-matching on at least one of the associated resource of the non-power-saving information, the resource of the second target user equipment, and an overlapping part of the associated resource of the non-power-saving information and the resource of the second target user equipment.

For example, when one UE is considering transmission of the non-power-saving information (such as the normal data/control information), the associated resource of the non-power-saving information and the resource of the second target user equipment at least partially overlap, and then rate-matching is performed on at least one of a resource B (the associated resource of the non-power-saving information), a resource C (the resource of the second target user equipment) and a resource D (the overlapping part of the associated resource of the non-power-saving information and the resource of the second target user equipment).

Optionally, the resource of the second target user equipment includes at least one of the following:
a resource of power saving information of the second target user equipment;
at least a part of a resource of a target resource associated with the power saving information of the second target user equipment; or
at least a part of a resource of at least a part of the target resource indicated by the power saving information of the second target user equipment.

The resource of the second target user equipment may include a first resource and/or a second resource. The first resource is a (candidate) resource of using/indicating/reserving target information (at least one of power saving information, occupancy information or power saving indication command) of at least one of the first user equipment, the second user equipment, the first target user equipment (the target UE), another UE (UE except for the former three) and any UE. Certainly, the first resource may not be limited to a location of one resource (resource X), or may also be a periodic resource, and may be called a future periodic resource corresponding to the resource X, that is, a resource X location+P X L corresponding resource, P is a periodicity, and L>0. For example, the first user equipment uses a resource 1 of the power saving information, in addition to including the resource 1, the first resource may also include, after the resource 1, periodic resources with two resource lengths as a periodicity such as a resource 4 and a resource 7. The second resource is at least a part in a target resource associated with/indicated by/reserved by the using/indicating/reserving target information (at least one of the power saving information, the occupancy information or the power saving indication command) of at least one of the first user equipment, the second user equipment, the first target user equipment (the target UE), another UE (UE except for the former three) and any UE.

For example, when one UE is considering transmission of the non-power-saving information (such as the normal data/control information), if the associated resource of the non-power-saving information and the resource X at least partially overlap, at least one of the following may be performed:
resource excluding/reselection/reevaluation/preempting is not triggered;
the associated resource of the non-power-saving information may be selected as the second candidate resource;
it is considered that the associated resource of the non-power-saving information may be used for/belong to the second candidate resource;
the associated resource of the non-power-saving information is not excluded as the second candidate resource;
the resource X and/or the future periodic resource corresponding to the resource X may be selected as the second candidate resource;
it is considered that the resource X and/or the future periodic resource corresponding to the resource X may be used for/belong to serving as the second candidate resource; or
the resource X and/or the future periodic resource corresponding to the resource X are/is not excluded as the second candidate resource.

If the future periodic resource corresponding to the resource X and the associated resource of the non-power-saving information at least partially overlap, at least one of the following may be performed:
resource excluding/reselection/reevaluation/preempting is not triggered;
the associated resource of the non-power-saving information may be selected as the second candidate resource;
it is considered that the associated resource of the non-power-saving information may be used for/belong to the second candidate resource;
the associated resource of the non-power-saving information is not excluded as the second candidate resource;
the resource X and/or the future periodic resource corresponding to the resource X may be selected as the second candidate resource;
it is considered that the resource X and/or the future periodic resource corresponding to the resource X may be used for/belong to serving as the second candidate resource; or
the resource X and/or the future periodic resource corresponding to the resource X are/is not excluded as the second candidate resource.

For another example, when one UE considers transmission of the non-power-saving information (such as the normal data/control information), if the associated resource of the non-power-saving information and the resource X at least partially overlap, at least one of the following may be performed:
resource excluding/reselection/reevaluation/preempting is triggered;
the second candidate resource may not select the associated resource of the non-power-saving information;
it is considered that the associated resource of the non-power-saving information may not be used for/not belong to the second candidate resource;
the second candidate resource excludes the associated resource of the non-power-saving information;
the second candidate resource may not select the resource X and/or the future periodic resource corresponding to the resource X;
it is considered that the resource X and/or the future periodic resource corresponding to the resource X may be used for/belong to serving as the second candidate resource; or
the second candidate resource excludes the resource X and/or the future periodic resource corresponding to the resource X.

If the future periodic resource corresponding to the resource X and the associated resource of the non-power-saving information at least partially overlap, at least one of the following may be performed:
resource excluding/reselection/reevaluation/preempting is triggered;
the second candidate resource may not select the associated resource of the non-power-saving information;
it is considered that the associated resource of the non-power-saving information may not be used for/not belong to the second candidate resource;
the second candidate resource excludes the associated resource of the non-power-saving information;
the second candidate resource may not select the resource X and/or the future periodic resource corresponding to the resource X;
it is considered that the resource X and/or the future periodic resource corresponding to the resource X may be used for/belong to serving as the second candidate resource; or
the second candidate resource excludes the resource X and/or the future periodic resource corresponding to the resource X.

Certainly, for example, one UE is considering transmission of the non-power-saving information (such as the normal data/control information), if the associated resource of the non-power-saving information and the resource (the first resource and/or the second resource) of the second target user equipment at least partially overlap, rate-matching is performed on the associated resource of the non-power-saving information, the resource of the second target user equipment and the overlapping part of them.

Application of the method in this embodiment of this application is described below with reference to a specific application.

In a first scenario, as shown in FIG. 3, a protocol stipulates that a resource A and a resource B correspond to the resource 1, and a resource C corresponds to the resource 2, so if the transmission of the power saving information is performed on the resource 1, the associated target resource is the resource A and the resource B. Optionally, the protocol stipulates that the target resource associated with the power saving information is the resource A and the resource B, so no matter on which resource the power saving information is sent, the associated target resource is the resource A and the resource B.

The power saving information indicates a time domain offset and/or a frequency domain offset from at least one associated resource, for example, indicating a time domain offset 1 and a frequency domain offset 1 from the associated resource A.

In a second scenario, if the UE1 intends to send the power saving information (such as the occupancy information) on a certain resource, and the power saving information indicates/reserves the target resource (for example, used for the transmission of the power saving indication command), and if the UE1 further intends to send a first object (such as a control signal and/or data), the resource of the power saving information and/or the target resource associated therewith may not be excluded when a resource for the first object is selected. Further, if the UE1 selects the target resource and uses it for sending the first object, a content (such as the target transmission) originally intended to be in transmission on the resource of the power saving information and/or the target resource, and the first object may be sent together.

If the UE1 sends the power saving information (such as the occupancy information) on a certain resource, the power saving information indicates/reserves the target resource (for example, used for the transmission of the power saving indication command), and the UE2 intends to send the first object, the UE2 may not exclude the resource of the power saving information of the UE1 and/or the target resource indicated/reserved thereby when selecting the resource for the first object.

If the UE1 indicates that the power saving information has been sent or is reserved to be sent on a certain resource, a candidate resource of the first object that the UE2 intending to send and the resource of the power saving information overlap, or the candidate resource of the first object that the UE2 intending to send and a future periodic reserved resource of the power saving information overlap, the UE2 may not exclude the resource of the power saving information of the UE1 and/or the future periodic resource (also called the future periodic reserved resource) corresponding thereto when selecting the resource of the first object, or in this case, resource reselection or reevaluation or preempting of the UE2 may not be triggered.

If the power saving information only occupies a part of a resource of first several symbols of a PSCCH or PSSCH resource of another UE (UE except for the UE1 and the UE2), the another UE does not need to reselect a PSCCH or PSSCH resource but may perform rate matching on this resource, so as to achieve better energy saving.

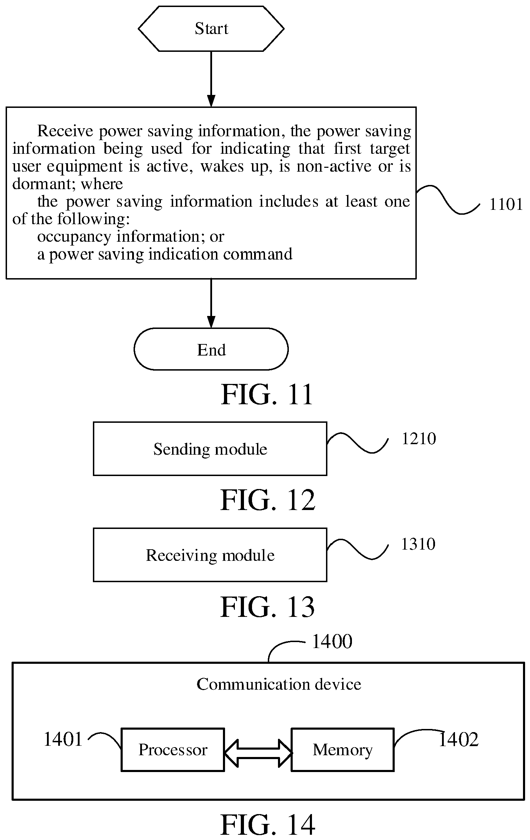

As shown in FIG. 11, an embodiment of this application further provides a power saving processing method, executed by second user equipment and including:
step 1101: receive power saving information, the power saving information being used for indicating that first target user equipment is active, wakes up, is non-active or is dormant.

The power saving information includes at least one of the following:
occupancy information; or
a power saving indication command.

Optionally, the power saving information is used for indicating at least one of the following:
the power saving indication command;
occupancy information;
an identity related to the first target user equipment;
a power saving mechanism of the first target user equipment;
an effective duration;
a transmission type; or
at least a part of a target resource.

Optionally, the occupancy information is used for indicating at least one of the following:
the power saving indication command;
an identity related to the first target user equipment;
an effective duration;
a transmission type; or
at least a part of a target resource.

Optionally, the power saving indication command is used for at least one of the following:
a current and/or another power saving indication command;
occupancy information;
a power saving mechanism of the first target user equipment;
an identity related to the first target user equipment;
an effective duration;
a transmission type; or
at least a part of a target resource.

Optionally, the power saving information is associated with the target resource.

Optionally, an associated mode of the power saving information and the target resource includes at least one of the following that:
a corresponding relationship exists between the power saving information and at least a part of the target resource;
a corresponding relationship exists between the resource of the power saving information and at least a part of the target resource;
the transmission of the power saving information and a target transmission on at least a part of the target resource need to be performed; or
the power saving information indicates at least a part of the target resource.

Optionally, a type of the target resource includes at least one of the following:
a resource of the occupancy information;
a resource of the power saving indication command;
a resource of the target transmission; or
an idle resource.

Optionally, a content of the target transmission includes:
a specific message, or any message.

The specific message includes at least one of the following:
a message with a target content;
a message corresponding to the first target user equipment;
a redundant message;
an invalid message;
a flag message;
a beacon message; or
a valid message.

Optionally, a content carried by the target transmission is indicated by the power saving information.

Optionally, the power saving information includes the type indication information of the target resource.

Optionally, the power saving information indicates at least a part of the target resource is indicating at least a part of the target resource through the occupancy information and/or the power saving indication command.

Optionally, a mode that the occupancy information and/or the power saving indication command indicate(s) at least a part of the target resource includes at least one of the following that:
a corresponding relationship exists between at least a part of the target resource, and at least one of the occupancy information and/or the power saving indication command; or
a target indication domain of the occupancy information and/or the power saving indication command indicates related information of at least a part of the target resource.

Optionally, the target indication domain includes at least one of the following:
a resource indication domain, used for indicating at least a part of the target resource;
an indication domain for the number of resources, used for indicating the number of at least a part of the target resource;
a priority indication domain, used for indicating a priority of at least a part of the target resource; or
a periodicity indication domain, used for indicating the periodicity of at least a part of the target resource.

Optionally, in a case that the occupancy information and/or the power saving indication command indicate(s) at least a part of the target resource, at least a part of the target resource includes at least one of the following:
a resource of the occupancy information;
a resource of the power saving indication command;
a resource of the target transmission; or
an idle resource.

Optionally, at least a part of the target resource indicated by the power saving information includes:
a target resource associated with the power saving information;
a resource for the transmission of the power saving information; and
a resource containing at least a part of a frequency domain resource for the power saving information transmission.

Optionally, at least a part of a resource in at least a part of the target resource indicated by the power saving information is the periodic resource.

Optionally, the power saving mechanism of the first target user equipment indicated by the power saving indication command includes at least one of the following:
active or wake up;
non-active or dormant;
prolonging active or wake up time;
prolonging non-active or dormant time;
ending the active time; or
ending the non-active time.

Optionally, a priority of the power saving information is a priority of the occupancy information and/or a priority of the power saving indication command.

Optionally, the priority of the power saving information is:
a first priority;
a priority of the resource where the power saving information is located; or
a priority of the target resource associated with the power saving information.

Optionally, before receiving the power saving information, the method further includes:
determining a first candidate resource of the power saving information; and
determining a resource of the power saving information according to the first candidate resource.

Optionally, the first candidate resource includes: a resource of second target user equipment.

Optionally, the method further includes:
a second candidate resource of non-power-saving information is determined in a case that a non-power-saving information transmission needs to be performed.

Optionally, the second candidate resource includes at least one of the following:
an associated resource of the non-power-saving information; or
a resource of second target user equipment.

Optionally, the second candidate resource does not trigger at least one of resource excluding, reselection, reevaluation or preempting.

Optionally, the second candidate resource does not include at least one of the following:
an associated resource of the non-power-saving information; or
a resource of second target user equipment.

Optionally, the second candidate resource triggers at least one of resource excluding, reselection, reevaluation or preempting.

Optionally, the non-power-saving information is used for indicating at least one of the following:
a resource except for at least a part of the target resource indicated by the power saving information;
a resource except for at least a part of a resource in the target resource associated with the power saving information; or
a resource except for the resource of the second target user equipment.

Optionally, the method further includes:
performing, in a case that the associated resource of the non-power-saving information and the resource of the second target user equipment at least partially overlap, rate-matching on at least one of the associated resource of the non-power-saving information, the resource of the second target user equipment, and an overlapping part of the associated resource of the non-power-saving information and the resource of the second target user equipment.

Optionally, the resource of the second target user equipment includes at least one of the following:
a resource of power saving information of the second target user equipment;
at least a part of a resource of a target resource associated with the power saving information of the second target user equipment; or
at least a part of a resource of at least a part of the target resource indicated by the power saving information of the second target user equipment.

Since the power saving information indicates that it is active, wakes up, is non-active or is dormant currently, by receiving the power saving information, the second user equipment for executing the method in this embodiment of this application may perform adjustment of corresponding transmission subsequently, so unnecessary power consumption is avoided.

It needs to be noted that the method is implemented in cooperation with the above method executed by first user equipment, and an implementation mode of the above method embodiment is applicable to this method, which can achieve the same technical effects.

It needs to be noted that an executive body of the power saving processing method provided by this embodiment of this application may be a power saving processing apparatus, or a control module which is in the power saving processing apparatus and is used for executing and loading the power saving processing method. In this embodiment of this application, taking the power saving processing apparatus executing and loading the power saving processing method as an example, the power saving processing method provided by this embodiment of this application is described.

As shown in FIG. 12, a power saving processing apparatus of an embodiment of this application includes:
a sending module 1210, configured to send power saving information, the power saving information being used for indicating that first target user equipment is active, wakes up, is non-active or is dormant.

The power saving information includes at least one of the following:
occupancy information; or
a power saving indication command.

Optionally, the power saving information is used for indicating at least one of the following:
the power saving indication command;
occupancy information;
an identity related to the first target user equipment;
a power saving mechanism of the first target user equipment;
an effective duration;
a transmission type; or
at least a part of a target resource.

Optionally, the occupancy information is used for indicating at least one of the following:
the power saving indication command;
an identity related to the first target user equipment;
an effective duration;
a transmission type; or
at least a part of a target resource.

Optionally, the power saving indication command is used for indicating at least one of the following:
a current and/or another power saving indication command;
occupancy information;
a power saving mechanism of the first target user equipment;
an identity related to the first target user equipment;
an effective duration;
a transmission type; or
at least a part of a target resource.

Optionally, the power saving information is associated with the target resource.

Optionally, an associated mode of the power saving information and the target resource includes at least one of the following that:
a corresponding relationship exists between the power saving information and at least a part of the target resource;
a corresponding relationship exists between the resource of the power saving information and at least a part of the target resource;
the transmisison of the power saving information and a target transmission on at least a part of the target resource need to be performed; or
the power saving information indicates at least a part of the target resource.

Optionally, a type of the target resource includes at least one of the following:
a resource of the occupancy information;
a resource of the power saving indication command;
a resource of the target transmission; or
an idle resource.

Optionally, a content of the target transmission includes:
a specific message, or any message.

The specific message includes at least one of the following:
a message with a target content;
a message corresponding to the first target user equipment;
a redundant message;
an invalid message;
a flag message;
a beacon message; or
a valid message.

Optionally, a content carried by the target transmission is indicated by the power saving information.

Optionally, the apparatus further includes:
an obtaining module, configured to obtain type indication information of the target resource, the type indication information being used for indicating the type of the target resource.

Optionally, the power saving information includes the type indication information of the target resource.

Optionally, the power saving information indicates at least a part of the target resource is indicating at least a part of the target resource through the occupancy information and/or the power saving indication command.

Optionally, a mode that the occupancy information and/or the power saving indication command indicate(s) at least a part of the target resource includes at least one of the following that:
a corresponding relationship exists between at least a part of the target resource, and at least one of the occupancy information and/or the power saving indication command; or
a target indication domain of the occupancy information and/or the power saving indication command indicates related information of at least a part of the target resource.

Optionally, the target indication domain includes at least one of the following:
a resource indication domain, used for indicating at least a part of the target resource;
an indication domain for the number of resources, used for indicating the number of at least a part of the target resource;
a priority indication domain, used for indicating a priority of at least a part of the target resource; or
a periodicity indication domain, used for indicating the periodicity of at least a part of the target resource.

Optionally, in a case that the occupancy information and/or the power saving indication command indicate(s) at least a part of the target resource, at least a part of the target resource includes at least one of the following:
a resource of the occupancy information;
a resource of the power saving indication command;
a resource of the target transmission; or
an idle resource.

Optionally, at least a part of the target resource indicated by the power saving information includes:
a target resource associated with the power saving information;
a resource for the transmission of the power saving information; and
a resource containing at least a part of a frequency domain resource for the power saving information transmission.

Optionally, at least a part of a resource in at least a part of the target resource indicated by the power saving information is the periodic resource.

Optionally, the power saving mechanism of the first target user equipment indicated by the power saving indication command includes at least one of the following:
active or wake up;
non-active or dormant;
prolonging active or wake up time;
prolonging non-active or dormant time;
ending the active time; or
ending the non-active time.

Optionally, a priority of the power saving information is a priority of the occupancy information and/or a priority of the power saving indication command.

Optionally, the priority of the power saving information is:
a first priority;
a priority of the resource where the power saving information is located; or
a priority of the target resource associated with the power saving information.

Optionally, the apparatus further includes:
a first determining module, configured to determine a first candidate resource of the power saving information; and
a second determining module, configured to determine a resource of the power saving information according to the first candidate resource.

Optionally, the first candidate resource includes: a resource of second target user equipment.

Optionally, the apparatus further includes:
a third determining module, configured to determine a second candidate resource of non-power-saving information in a case that a non-power-saving information transmission needs to be performed.

Optionally, the second candidate resource includes at least one of the following:
an associated resource of the non-power-saving information; or
a resource of second target user equipment.

Optionally, the second candidate resource does not trigger at least one of resource excluding, reselection, reevaluation or preempting.

Optionally, the second candidate resource does not include at least one of the following:
an associated resource of the non-power-saving information; or
a resource of second target user equipment.

Optionally, the second candidate resource triggers at least one of resource excluding, reselection, reevaluation or preempting.

Optionally, the non-power-saving information is used for indicating at least one of the following:
a resource except for at least a part of the target resource indicated by the power saving information;
a resource except for at least a part of a resource in the target resource associated with the power saving information; or
a resource except for the resource of the second target user equipment.

Optionally, the apparatus further includes:
a first processing module, configured to perform, in a case that the associated resource of the non-power-saving information and the resource of the second target user equipment at least partially overlap, rate-matching on at least one of the associated resource of the non-power-saving information, the resource of the second target user equipment, and an overlapping part of the associated resource of the non-power-saving information and the resource of the second target user equipment.

Optionally, the resource of the second target user equipment includes at least one of the following:
a resource of power saving information of the second target user equipment;
at least a part of a resource of a target resource associated with the power saving information of the second target user equipment; or
at least a part of a resource of at least a part of the target resource indicated by the power saving information of the second target user equipment.

The apparatus can inform user equipment receiving the power saving information that the first target user equipment is active, wakes up, is non-active or is dormant currently, so that adjustment of corresponding transmission may be further performed subsequently, and unnecessary power consumption is avoided.

The power saving processing apparatus in this embodiment of this application may be an apparatus, and may also be a component, an integrated circuit or a chip in a terminal. The apparatus may be a mobile electronic device, and may also be a non-mobile electronic device. For example, the mobile electronic device may be a mobile phone, a tablet computer, a notebook computer, a palm computer, a vehicle-mounted electronic device, a wearable device, a UMPC, a netbook, or a PDA and the like; and the non-mobile electronic device may be a server, a network attached storage (Network Attached Storage, NAS), a personal computer (Personal Computer, PC), a television (television, TV), a teller machine, or a self-service machine and the like, which are not specifically limited in this embodiment of this application.

The power saving processing apparatus in this embodiment of this application may be an apparatus with an operating system. The operating system may be an Android (Android) operating system, may be an ios operating system, and may further be another possible operating system, which is not specifically limited in this embodiment of this application.

The power saving processing apparatus provided by this embodiment of this application can implement all processes of a method embodiment implemented by first user equipment in FIG. 2 to FIG. 10, which will not be repeated here to avoid repetition.

As shown in FIG. 13, a power saving processing apparatus of an embodiment of this application includes:
a receiving module 1310, configured to receiving module power saving information, the power saving information being used for indicating that first target user equipment is active, wakes up, is non-active or is dormant.

The power saving information includes at least one of the following:
occupancy information; or
a power saving indication command.

Optionally, the power saving information is used for indicating at least one of the following:
the power saving indication command;
occupancy information;
an identity related to the first target user equipment;
a power saving mechanism of the first target user equipment;
an effective duration;
a transmission type; or
at least a part of a target resource.

Optionally, the occupancy information is used for indicating at least one of the following:
the power saving indication command;
an identity related to the first target user equipment;
an effective duration;
a transmission type; or
at least a part of a target resource.

Optionally, the power saving indication command is used for at least one of the following:
a current and/or another power saving indication command;
occupancy information;
a power saving mechanism of the first target user equipment;
an identity related to the first target user equipment;
an effective duration;
a transmission type; or
at least a part of a target resource.

Optionally, the power saving information is associated with the target resource.

Optionally, an associated mode of the power saving information and the target resource includes at least one of the following that:
a corresponding relationship exists between the power saving information and at least a part of the target resource;
a corresponding relationship exists between the resource of the power saving information and at least a part of the target resource;
the transmission of the power saving information and a target transmission on at least a part of the target resource need to be performed; or
the power saving information indicates at least a part of the target resource.

Optionally, a type of the target resource includes at least one of the following:
a resource of the occupancy information;
a resource of the power saving indication command;
a resource of the target transmission; or
an idle resource.

Optionally, a content of the target transmission includes:
a specific message, or any message.

The specific message includes at least one of the following:
a message with a target content;
a message corresponding to the first target user equipment;
a redundant message;
an invalid message;
a flag message;
a beacon message; or
a valid message.

Optionally, a content carried by the target transmission is indicated by the power saving information.

Optionally, the power saving information includes the type indication information of the target resource.

Optionally, the power saving information indicates at least a part of the target resource is indicating at least a part of the target resource through the occupancy information and/or the power saving indication command.

Optionally, a mode that the occupancy information and/or the power saving indication command indicate(s) at least a part of the target resource includes at least one of the following that:
a corresponding relationship exists between at least a part of the target resource, and at least one of the occupancy information and/or the power saving indication command; or
a target indication domain of the occupancy information and/or the power saving indication command indicates related information of at least a part of the target resource.

Optionally, the target indication domain includes at least one of the following:
a resource indication domain, used for indicating at least a part of the target resource;
an indication domain for the number of resources, used for indicating the number of at least a part of the target resource;
a priority indication domain, used for indicating a priority of at least a part of the target resource; or
a periodicity indication domain, used for indicating the periodicity of at least a part of the target resource.

Optionally, in a case that the occupancy information and/or the power saving indication command indicate(s) at least a part of the target resource, at least a part of the target resource includes at least one of the following:
a resource of the occupancy information;
a resource of the power saving indication command;
a resource of the target transmission; or
an idle resource.

Optionally, at least a part of the target resource indicated by the power saving information includes:
a target resource associated with the power saving information;
a resource for the transmission of the power saving information; and
a resource containing at least a part of a frequency domain resource for the power saving information transmission.

Optionally, at least a part of a resource in at least a part of the target resource indicated by the power saving information is the periodic resource.

Optionally, the power saving mechanism of the first target user equipment indicated by the power saving indication command includes at least one of the following:
active or wake up;
non-active or dormant;
prolonging active or wake up time;
prolonging non-active or dormant time;
ending the active time; or
ending the non-active time.

Optionally, a priority of the power saving information is a priority of the occupancy information and/or a priority of the power saving indication command.

Optionally, the priority of the power saving information is:
a first priority;
a priority of the resource where the power saving information is located; or
a priority of the target resource associated with the power saving information.

Optionally, the apparatus further includes:
a fourth determining module, configured to determine a first candidate resource of the power saving information; and
a fifth determining module, configured to determine a resource of the power saving information according to the first candidate resource.

Optionally, the first candidate resource includes: a resource of second target user equipment.

Optionally, the apparatus further includes:
a sixth determining module, configured to determine a second candidate resource of non-power-saving information in a case that a non-power-saving information transmission needs to be performed.

Optionally, the second candidate resource includes at least one of the following:
an associated resource of the non-power-saving information; or
a resource of second target user equipment.

Optionally, the second candidate resource does not trigger at least one of resource excluding, reselection, reevaluation or preempting.

Optionally, the second candidate resource does not include at least one of the following:
an associated resource of the non-power-saving information; or
a resource of second target user equipment.

Optionally, the second candidate resource triggers at least one of resource excluding, reselection, reevaluation or preempting.

Optionally, the non-power-saving information is used for indicating at least one of the following:
a resource except for at least a part of the target resource indicated by the power saving information;
a resource except for at least a part of a resource in the target resource associated with the power saving information; or
a resource except for the resource of the second target user equipment.

Optionally, the apparatus further includes:
a second processing module, configured to perform, in a case that the associated resource of the non-power-saving information and the resource of the second target user equipment at least partially overlap, rate-matching on at least one of the associated resource of the non-power-saving information, the resource of the second target user equipment, and an overlapping part of the associated resource of the non-power-saving information and the resource of the second target user equipment.

Optionally, the resource of the second target user equipment includes at least one of the following:
a resource of power saving information of the second target user equipment;
at least a part of a resource of a target resource associated with the power saving information of the second target user equipment; or
at least a part of a resource of at least a part of the target resource indicated by the power saving information of the second target user equipment.

Since the power saving information indicates that it is active, wakes up, is non-active or is dormant currently, by receiving the power saving information, the apparatus may perform adjustment of corresponding transmission subsequently, so unnecessary power consumption is avoided.

The power saving processing apparatus in this embodiment of this application may be an apparatus, and may also be a component, an integrated circuit or a chip in a terminal. The apparatus may be a mobile electronic device, and may also be a non-mobile electronic device. For example, the mobile electronic device may be a mobile phone, a tablet computer, a notebook computer, a palm computer, a vehicle-mounted electronic device, a wearable device, a UMPC, a netbook, or a PDA and the like; and the non-mobile electronic device may be a server, a network attached storage (Network Attached Storage, NAS), a personal computer (Personal Computer, PC), a television (television, TV), a teller machine, or a self-service machine and the like, which are not specifically limited in this embodiment of this application.

The power saving processing apparatus in this embodiment of this application may be an apparatus with an operating system. The operating system may be an Android (Android) operating system, may be an ios operating system, and may further be another possible operating system, which is not specifically limited in this embodiment of this application.

The power saving processing apparatus provided by this embodiment of this application can implement all process of a method embodiment executed by second user equipment in FIG. 11, which will not be repeated here to avoid repetition.

Optionally, as shown in FIG. 14, an embodiment of this application further provides a communication device 1400, including a processor 1401, a memory 1402 and a program or an instruction stored in the memory 1402 and capable of running on the processor 1401, for example, when the communication device 1400 is user equipment, the program or the instruction, when executed by the processor 1401, implements all processes of the above embodiment of the power saving processing method executed by first user equipment or second user equipment, which can achieve the same technical effects.

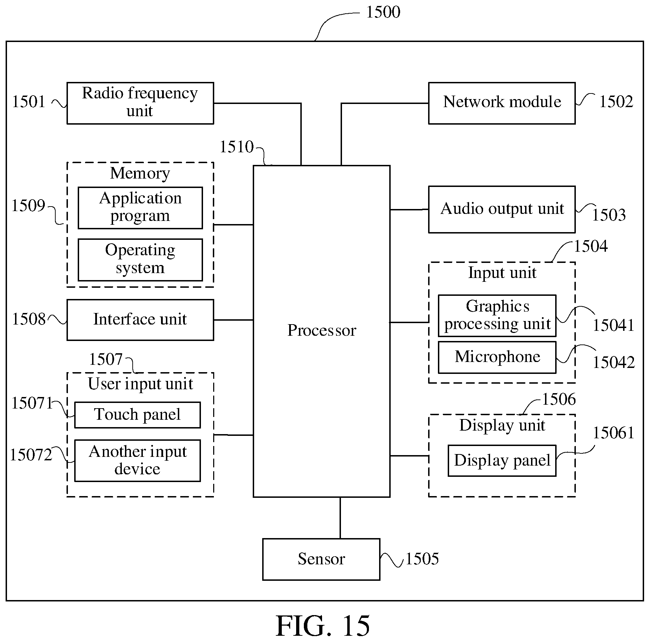

FIG. 15 is a schematic diagram of a hardware structure of user equipment for implementing all embodiments of this application.

The user equipment 1500 includes but not limited to: components such as a radio frequency unit 1501, a network module 1502, an audio output unit 1503, an input unit 1504, a sensor 1505, a display unit 1506, a user input unit 1507, an interface unit 1508, a memory 1509 and a processor 1510.

A person of skill in the art may understand that the user equipment 1500 may further include a power supply (such as a battery) for supplying power to all the components. The power supply may be logically connected to the processor 1510 through a power management system, thereby implementing functions, such as charging, discharging, and power consumption management, by using the power management system. A structure of the user equipment shown in FIG. 15 constitutes no limitation on the user equipment, and the user equipment may include more or fewer components than those shown in the figure, or some components may be combined, or a different component deployment may be used, which will not be repeated here.

It is to be understood that in this embodiment of this application, the input unit 1504 may include a graphics processing unit (Graphics Processing Unit, GPU) 15041 and a microphone 15042. The graphics processing unit 15041 performs processing on image data of a static picture or a video that is obtained by an image acquisition apparatus (for example, a camera) in a video acquisition mode or an image acquisition mode. The display unit 1506 may include a display panel 15061. The display panel 15061 may be configured in the form of a liquid crystal display, an organic light-emitting diode, or the like. The user input unit 1507 includes a touch panel 15071 and another input device 15072. The touch panel 15071 is also called a touch screen. The touch panel 15071 may include two parts: a touch detection apparatus and a touch controller. The another input device 15072 may include, but is not limited to a physical keyboard, a functional key (such as a volume control key or a switch key), a track ball, a mouse, and a joystick, which will not be repeated here.

In this embodiment of this application, downlink data from a network-side device is processed by the processor 1510 after being received by the radio frequency unit 1501. In addition, uplink data is sent to the network-side device. Generally, the radio frequency unit 1501 includes, but is not limited to an antenna, at least one amplifier, a transceiver, a coupler, a low noise amplifier, a duplexer, and the like.

The memory 1509 may be configured to store a software program or an instruction and various data. The memory 1509 may mainly include a program or instruction storage area and a data storage area. The program or instruction storage area may store an operating system, an application program or an instruction required by at least one function (such as a sound play function and an image play function), and the like. Besides, the memory 1509 may include a high speed random access memory, and may also include a non-volatile memory. The non-volatile memory may be a read-only memory (Read-Only memory, ROM), a programmable ROM (Programmable ROM, PROM), an erasable programmable read-only memory (Erasable PROM, EPROM), an electrically EPROM (Electrically EPROM, EEPROM), or a flash memory. For example, at least one magnetic disk storage device, a flash memory device or another non-volatile solid-state storage device.

The processor 1510 may include one or more processing units. Optionally, the processor 1510 may integrate an application processor and a modem processor. The application processor mainly processes an operating system, a user interface, and an application program or an instruction, and the like, and the modem processor mainly processes wireless communication, such as a baseband processor. It may be understood that the above modem processor may also not be integrated into the processor 1510.

The user equipment executes a power saving processing method executed by first user equipment as described above.

The radio frequency unit 1501 is configured to send power saving information, the power saving information being used for indicating that first target user equipment is active, wakes up, is non-active or is dormant.

The power saving information includes at least one of the following:
occupancy information; or
a power saving indication command.

By sending the power saving information for indicating that the first target user equipment is active, wakes up, is non-active or is dormant, the user equipment can inform user equipment receiving the power saving information that the first target user equipment is active, wakes up, is non-active or is dormant currently, so that adjustment of corresponding transmission may be further performed subsequently, and unnecessary power consumption is avoided.

Optionally, the user equipment executes the above power saving processing method executed by second user equipment.

The radio frequency unit 1501 is configured to receive the power saving information, the power saving information being used for indicating that the first target user equipment is active, wakes up, is non-active or is dormant.

The power saving information includes at least one of the following:
occupancy information; or
a power saving indication command.

Since the power saving information indicates that it is active, wakes up, is non-active or is dormant currently, by receiving the power saving information, the user equipment may perform adjustment of corresponding transmission subsequently, so unnecessary power consumption is avoided.

An embodiment of this application further provides a readable storage medium, storing a program or an instruction, the program or the instruction, when executed by a processor, implementing all processes of the above embodiment of the power saving processing method executed by first user equipment or second user equipment, which can achieve the same technical effects and will not be repeated here to avoid repetition.

The processor is a processor in an electronic device in the above embodiment. The readable storage medium includes a computer-readable storage medium, such as a computer read-only memory (Read-Only memory, ROM), a random access memory (Random Access memory, RAM), a magnetic disk, or an optical disc.

An embodiment of this application further provides a chip, including a processor and a communication interface, the communication interface being coupled to the processor, and the processor being configured to run a program or an instruction to implement all processes of the above embodiment of the power saving processing method executed by first user equipment or second user equipment, which can achieve the same technical effects and will not be repeated here to avoid repetition.

It is to be understood that the chip mentioned in this embodiment of this application may also be called a system-level chip, a system chip, a chip system, a system-on-a-chip or the like.

An embodiment of this application further provides a computer program product, stored in a non-volatile storage medium, the program product being executed by at least one processor to implement all processes of the above embodiment of the power saving processing method executed by first user equipment or second user equipment, which can achieve the same technical effects and will not be repeated here to avoid repetition.

It needs to be noted that the terms "include", "contain", or any other variation thereof herein is intended to cover a non-exclusive inclusion, so that a process, a method, an article or an apparatus including a series of elements not only includes those elements, but also includes other elements not listed clearly, or further includes elements inherent to the process, the method, the article or the apparatus. Without more limitations, if an element is defined by the sentence "including one...", it does not exclude that there are still other same elements in the process, the method, the article or the apparatus including the element. Besides, the scope of the method and the apparatus in implementations of this application is not limited to executing functions according to a shown or discussed sequence, it may also include that functions are executed in a basically simultaneously mode or in an opposite sequence according to the involved functions, for example, the described method may be executed in an order different from the described one, and various steps may also be added, omitted, or combined. In addition, features described with reference to some examples may also be combined in other examples.

According to the descriptions in the foregoing implementations, a person of skill in the art may clearly learn that the method of the foregoing embodiment may be implemented by relying on software and a universal hardware platform or by using hardware, but the former one is a better implementation in most cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air-conditioner, a network device, or the like) to perform the methods described in all the embodiments of this application.

The embodiments of this application have been described above with reference to the accompanying drawings. But this application is not limited to the specific implementations described above, and the above specific implementations are merely exemplary and not limitative. Those of ordinary skill in the art may also make various variations under the teaching of this application without departing from the spirit of this application and the protection scope of the claims, and such variations shall all fall within the protection of this application.

## Claims

1. A power saving processing method, executed by first user equipment and comprising:
sending power saving information, the power saving information being used for indicating that first target user equipment is active, wakes up, is non-active or is dormant, and
the power saving information comprising at least one of the following:
occupancy information; or
a power saving indication command.

2. The method according to claim 1, wherein the power saving information is used for indicating at least one of the following:
the power saving indication command;
occupancy information;
an identity related to the first target user equipment;
a power saving mechanism of the first target user equipment;
an effective duration;
a transmission type; or
at least a part of a target resource.

3. The method according to claim 1, wherein the occupancy information is used for indicating at least one of the following:
the power saving indication command;
an identity related to the first target user equipment;
an effective duration;
a transmission type; or
at least a part of a target resource.

4. The method according to claim 1, wherein the power saving indication command is used for indicating at least one of the following:
a current and/or another power saving indication command;
occupancy information;
a power saving mechanism of the first target user equipment;
an identity related to the first target user equipment;
an effective duration;
a transmission type; or
at least a part of a target resource.

5. The method according to claim 1, wherein the power saving information is associated with a target resource.

6. The method according to claim 5, wherein an associated mode of the power saving information and the target resource comprises at least one of the following that:
a corresponding relationship exists between the power saving information and at least a part of the target resource;
a corresponding relationship exists between a resource of the power saving information and at least a part of the target resource;
the transmission of the power saving information and a target transmission on at least a part of the target resource need to be performed; or
the power saving information indicates at least a part of the target resource.

7. The method according to claim 5, wherein a type of the target resource comprises at least one of the following:
a resource of the occupancy information;
a resource of the power saving indication command;
a resource of a target transmission; or
an idle resource.

8. The method according to claim 6 or 7, wherein a content of the target transmission comprises:
a specific message, or any message; wherein
the specific message comprises at least one of the following:
a message with a target content;
a message corresponding to the first target user equipment;
a redundant message;
an invalid message;
a flag message;
a beacon message; or
a valid message.

9. The method according to claim 8, wherein a content carried by the target transmission is indicated by the power saving information.

10. The method according to claim 5, further comprising:
obtaining type indication information of the target resource, the type indication information being used for indicating a type of the target resource.

11. The method according to claim 5, wherein the power saving information comprises type indication information of the target resource.

12. The method according to claim 2 or 6, wherein the power saving information indicates at least a part of the target resource through the occupancy information and/or the power saving indication command.

13. The method according to claim 12, wherein a mode that the occupancy information and/or the power saving indication command indicate(s) at least a part of the target resource comprises at least one of the following that:
a corresponding relationship exists between the at least a part of the target resource, and at least one of the occupancy information and/or the power saving indication command; or
a target indication domain of the occupancy information and/or the power saving indication command indicates related information of at least a part of the target resource.

14. The method according to claim 12, wherein in a case that the occupancy information and/or the power saving indication command indicate(s) at least a part of the target resource, the at least a part of the target resource comprises at least one of the following:
a resource of the occupancy information;
a resource of the power saving indication command;
a resource of the target transmission; or
an idle resource.

15. The method according to claim 2 or 6, wherein at least a part of the target resource indicated by the power saving information comprises:
a target resource associated with the power saving information;
a resource for transmission of the power saving information; and
a resource containing at least a part of a frequency domain resource for the power saving information transmission.

16. The method according to claim 6, wherein at least a part of a resource in at least a part of the target resource indicated by the power saving information is a periodic resource.

17. The method according to claim 2, wherein the power saving mechanism of the first target user equipment indicated by the power saving information comprises at least one of the following:
active or wake up;
non-active or dormant;
prolonging active or wake up time;
prolonging non-active or dormant time;
ending the active time; or
ending the non-active time.

18. The method according to claim 1, wherein a priority of the power saving information is a priority of the occupancy information and/or a priority of the power saving indication command.

19. The method according to claim 18, wherein the priority of the power saving information is:
a first priority;
a priority of a resource where the power saving information is located; or
a priority of a target resource associated with the power saving information.

20. The method according to claim 1, wherein before the sending the power saving information, the method further comprises:
determining a first candidate resource of the power saving information; and
determining a resource of the power saving information according to the first candidate resource.

21. The method according to claim 20, wherein the first candidate resource comprises: a resource of second target user equipment.

22. The method according to claim 1, further comprising:
determining a second candidate resource of non-power-saving information in a case that the non-power-saving information transmission needs to be performed.

23. The method according to claim 22, wherein the second candidate resource comprises at least one of the following:
an associated resource of the non-power-saving information; or
a resource of second target user equipment.

24. The method according to claim 22, wherein the second candidate resource does not trigger at least one of resource excluding, reselection, reevaluation or preempting.

25. The method according to claim 22, wherein the second candidate resource does not comprise at least one of the following:
an associated resource of the non-power-saving information; or
a resource of second target user equipment.

26. The method according to claim 22, wherein the second candidate resource triggers at least one of resource excluding, reselection, reevaluation or preempting.

27. The method according to claim 22, wherein the non-power-saving information is used for indicating at least one of the following:
a resource except for at least a part of a target resource indicated by the power saving information;
a resource except for at least a part of a resource in a target resource associated with the power saving information; or
a resource except for the resource of second target user equipment.

28. The method according to claim 1, further comprising:
performing, in a case that an associated resource of non-power-saving information and a resource of second target user equipment at least partially overlap, rate-matching on at least one of the associated resource of the non-power-saving information, the resource of the second target user equipment, and an overlapping part of the associated resource of the non-power-saving information and the resource of the second target user equipment.

29. The method according to claim 21, 23, 25, 27 or 28, wherein the resource of the second target user equipment comprises at least one of the following:
a resource of power saving information of the second target user equipment;
at least a part of a resource of a target resource associated with the power saving information of the second target user equipment; or
at least a part of a resource of at least a part of the target resource indicated by the power saving information of the second target user equipment.

30. The method according to claim 13, wherein the target indication domain comprises at least one of the following:
a resource indication domain, used for indicating at least a part of the target resource;
an indication domain for a number of resources, used for indicating a number of at least a part of the target resource;
a priority indication domain, used for indicating a priority of at least a part of the target resource; or
a periodicity indication domain, used for indicating a periodicity of at least a part of the target resource.

31. A power saving processing method, executed by second user equipment and comprising:
receiving power saving information, the power saving information being used for indicating that first target user equipment is active, wakes up, is non-active or is dormant, and
the power saving information comprising at least one of the following:
occupancy information; or
a power saving indication command.

32. The method according to claim 31, wherein the power saving information is used for indicating at least one of the following:
the power saving indication command;
occupancy information;
an identity related to the first target user equipment;
a power saving mechanism of the first target user equipment;
an effective duration;
a transmission type; or
at least a part of a target resource.

33. The method according to claim 31, wherein the occupancy information is used for indicating at least one of the following:
the power saving indication command;
an identity related to the first target user equipment;
an effective duration;
a transmission type; or
at least a part of a target resource.

34. The method according to claim 31, wherein the power saving indication command is used for at least one of the following:
a current and/or another power saving indication command;
occupancy information;
a power saving mechanism of the first target user equipment;
an identity related to the first target user equipment;
an effective duration;
a transmission type; or
at least a part of a target resource.

35. The method according to claim 31, wherein the power saving information is associated with a target resource.

36. A power saving processing apparatus, comprising:
a sending module, configured to send power saving information, the power saving information being used for indicating that first target user equipment is active, wakes up, is non-active or is dormant, and
the power saving information comprising at least one of the following:
occupancy information; or
a power saving indication command.

37. A power saving processing apparatus, comprising:
a receiving module, configured to receive power saving information, the power saving information being used for indicating that first target user equipment is active, wakes up, is non-active or is dormant, and
the power saving information comprising at least one of the following:
occupancy information; or
a power saving indication command.

38. A communication device, comprising a processor, a memory, and a program or an instruction stored in the memory and executable on the processor, and the program or the instruction, when executed by the processor, implementing steps of the power saving processing method according to any one of claims 1 to 30 or steps of the power saving processing method according to any one of claims 31 to 35.

39. A readable storage medium, storing a program or an instruction, and the program or the instruction, when executed by a processor, implementing steps of the power saving processing method according to any one of claims 1 to 30 or steps of the power saving processing method according to any one of claims 31 to 35.
